# FASCICULE DE BREVET EUROPEEN

(11) **EP 2 527 350 B1**
(45) Date de publication et mention de la délivrance du brevet: **03.06.2015**
(21) Numéro de dépôt: 12180417.3
(22) Date de dépôt: 21.04.2008
(51) Int. Cl.: C07F 9/50

(54) **Procédé de préparation de ligands de type phosphines butadiéniques, leurs complexes avec le cuivre, et leurs applications en catalyse**
Verfahren zur Herstellung von Liganden vom Typ Butadien-Phosphine, ihre mit Kupfer verbundenen Komplexe und ihre Anwendungen in der Katalyse
Method for preparing phosphine butadiene ligands, complexes thereof with copper and the use of same in catalysis

(30) Priorité: 20.04.2007 FR 0702878
(43) Date de publication de la demande: 28.11.2012
(62) Demande divisionnaire de: 08737504.4
(73) Titulaire: Centre National de la Recherche Scientifique (CNRS), 75016 Paris (FR); Ecole Nationale Supérieure de Chimie de Montpellier, 34296 Montpellier Cedex 5 (FR); Universite Sidi Mohammed Ben Abdellah, Fes, 30000 (MA)
(72) Inventeur: Taillefer, Marc, 34570 Vailhauques (FR); Kaddouri, Hamid, 34000 MONTPELLIER (FR); Ouali, Armelle, 31400 TOULOUSE (FR); Ouazzani, Fouad, 30000 FES (MA)
(74) Mandataire: Colombet, Alain André

(56) Documents cités:
- FR-A1- 2 859 205
- BELETSKAYA I P ET AL: "Copper in cross-coupling reactions - The post-Ullmann chemistry", COORDINATION CHEMISTRY REVIEWS, ELSEVIER SCIENCE, AMSTERDAM, NL, vol. 248, no. 21-24, 1 décembre 2004 (2004-12-01), pages 2337-2364, XP004917433, ISSN: 0010-8545, DOI: 10.1016/J.CCR.2004.09.014

## Description

La présente invention concerne un procédé de préparation de ligands phosphorés de type phosphine butadiénique, leurs applications, notamment comme ligands de métaux catalytiques utilisés dans les réactions de formation de liaisons carbone-carbone et cabone-hétéroatome.

Les dérivés phosphorés butadiéniques sont connus depuis les années 60 et présentent un intérêt en synthèse organique, du fait de leur caractère électrophile et de leur activité biologique, notamment antivirale.

Avec le développement de la synthèse asymétrique, les dérivés phosphorés butadiéniques font aujourd'hui l'objet de recherches intensives pour leur grande importance en chimie de coordination par la présence, dans ces dérivés, de deux ligands très employés en chimie de coordination : le ligand phosphine, et le ligand butadiène.

Les procédés de synthèse de dérivés de type phosphine butadiénique sont aujourd'hui peu nombreux. Ils mettent généralement en oeuvre des composés de départ élaborés et/ou de nombreuses étapes de synthèse, conduisant ainsi à des rendements globaux médiocres.

Ainsi, par exemple, M. D. Fryzuk et coll. (J. Org. Chem., (1988), 53, 4425-4426) divulguent un procédé de préparation de phosphines butadiéniques en deux étapes, la première étape consistant en une hydrozirconation d'un ényne conjugué rendant ainsi le procédé relativement complexe à mettre en oeuvre.

Z. Xi et coll. (Tetrahedron Lett., (2004), 45, 2427-2429) fait également intervenir un alcyne comme composé de départ, alcyne qui est mis en réaction avec un complexe du zirconium.

M. P. Teulade et P. Savignac (Tetrahedron Lett., (1989), 30(46), 6327-6330) proposent une synthèse générale de phosphines butadiéniques basée sur une réaction de Wittig-Horner à partir de phosphonates cycliques, et J. L. Cabioch et J. M. Denis (J. Organomet. Chem., (1989), 377(2-3), 227-233) proposent quant à eux un exemple de synthèse d'une phosphine butadiénique primaire non substituée à partir du phosphonate correspondant en présence d'un sel d'aluminium.

FR 2 859 205 et Beletskaya et al., Coord. Chem. Rev., 2004, 248(21-24), 2337-64 décrivent divers procédés de création de liaison carbone-carbone (C-C) ou de liaison carbone-hétéroatome (C-HE) catalysés par au au moins un complexe de cuivre qui diffèrent de ceux revendiqué par l'absence de phosphine butadiénique.

D'autres synthèses encore ont été décrites, toutes cependant comportent un grand nombre d'étapes, nécessitent des produits de départ onéreux ou difficiles à mettre en oeuvre ou à préparer, conduisent aux produits souhaités seulement avec des rendements faibles, ou bien encore ne permettent pas l'accès à une grande variété de phosphines butadiéniques.

Aussi, un premier objectif de la présente invention consiste à proposer une voie de synthèse adaptée à la préparation de diverses phosphines butadiéniques, avec des rendements acceptables, et dont la mise en oeuvre est aisée, avantageusement avec un minimum d'étapes, à partir de composés de départ relativement courants ou faciles à préparer.

Il a maintenant été découvert que ce premier objectif, ainsi que d'autres qui apparaîtront au cours de la description de l'invention qui suit, est atteint en totalité ou au moins en partie grâce au procédé de préparation de phosphines butadiéniques exposé ci-dessous.

Il est tout d'abord divulgué le procédé de préparation d'une phosphine butadiénique de formule (1) : 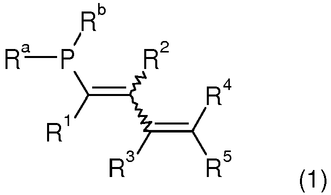 formule dans laquelle :
- R^{a} et R^{b}, identiques ou différents, de préférence identiques, représentent chacun un radical indépendamment choisi parmi alkyle, aryle, hétéroaryle, monoalkylamino, dialkylamino, alkoxy, aryloxy et hétéroaryloxy ;
- R¹, R², R³, R⁴ et R⁵, identiques ou différents, sont choisis indépendamment parmi l'hydrogène, un radical hydrocarboné, un radical aryle et un radical hétéroaryle ;
   ledit procédé comprenant les étapes de :
   a) mise en contact d'un halogénure de phosphonium de formule (2), avec une base forte, dans un solvant polaire aprotique, par exemple le tétrahydrofurane, à basse température, généralement entre -70°C et 0°C, par exemple -50°C, pour conduire au diylure de phosphorium (3) : 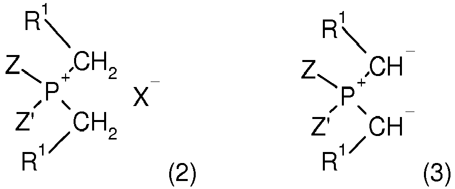 où R¹ est tel que défini précédemment, Z et Z' possèdent des définitions identiques à celles de R^{a} et R^{b} définis précédemment, et X représente un atome d'halogène choisi parmi fluor, chlore, brome et iode ;
   b) lequel diylure (3) est mis à réagir, en milieu solvant polaire aprotique, par exemple le tétrahydrofurane, à une température généralement comprise entre -70°C et +10°C, par exemple -10°C, avec une halogénophosphine (4) : 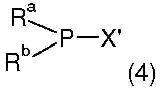 où R^{a} et R^{b} sont tels que définis précédemment, et X' représente un atome d'halogène choisi parmi fluor, chlore, brome et iode ;
      pour conduire à l'ylure de phosphonium (5a) qui subit un réarrangement par prototropie pour donner l'ylure de phosphonium (5b) : 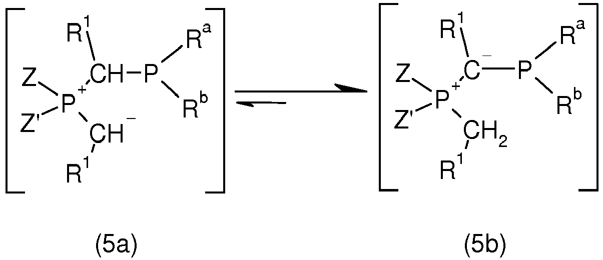 où R^{a}, R^{b}, R¹, Z et Z' sont tels que définis précédemment ;
   c) l'ylure (5b) étant alors mis en présence, généralement à une température comprise entre 0°C et 50°C, par exemple à température ambiante, dans un solvant polaire aprotique, tel que le tétrahydrofurane, d'un dérivé carbonylé α,β-insaturé de formule (6) : 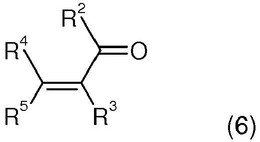
dans laquelle R², R³, R⁴ et R⁵ sont tels que définis précédemment,
pour conduire, après élimination du solvant et éventuelle purification, à la phosphine butadiénique (1).

Dans un mode de réalisation R⁴ et/ou R⁵ peuvent être liés de manière à constituer avec l'atome de carbone qui les porte un groupe carbocyclique ou hétérocyclique ayant de 3 à 20 atomes de carbone, saturé, insaturé, monocyclique ou polycyclique comprenant deux ou trois cycles, les cycles adjacents pouvant être de nature aromatique,

Le procédé décrit ci-dessus peut avantageusement être réalisé dans un seul réacteur (« one pot »), c'est-à-dire sans qu'il soit nécessaire d'isoler tous ou certains des intermédiaires. On peut cependant, bien entendu et si on le souhaite, isoler un ou plusieurs des intermédiaires, avantageusement lorsqu'ils sont stables.

La base forte utilisée pour la préparation du diylure de phosphonium (3) décrit ci-dessus, est généralement une base métallée, c'est-à-dire une base forte comportant un ou plusieurs métaux, avantageusement choisis parmi les métaux alcalins et alcalino-terreux, et en particulier parmi lithium, sodium, potassium, magnésium, calcium et baryum. Les bases fortes lithiées sont préférées, notamment le butyllithium. Dans ce cas, le contre-ion du diylure de phosphonium (3) est le cation lithium.

Dans la présente invention, les termes suivants ont les significations ci-après, sauf indication contraire :
- « alkyle » représente un radical hydrocarboné saturé, linéaire ou ramifié comportant de 1 à 10 atomes de carbone, de préférence de 1 à 6 atomes de carbone, et en particulier le radical méthyle, éthyle, les radicaux propyles, butyles, pentyles, hexyles, heptyles, octyles, nonyles et décyles ;
- « aryle » représente un radical hydrocarboné aromatique mono ou polycyclique, et par exemple le radical phényle et le radical naphtyle ;
- « hétéroaryle » représente un radical hydrocarboné aromatique mono ou polycyclique, comportant en outre un ou plusieurs hétéroatomes, identiques ou différents, choisis parmi azote, oxygène, soufre, chacun des cycles comportant 5 ou 6 chaînons ; des exemples de radicaux hétéroaryle sont les radicaux pyridyles, quinolyles, imidazolyles, tétrazolyles, sans que cette liste ne constitue une quelconque limitation ;
- « radical hydrocarboné » tel qu'indiqué pour les radicaux R¹, R², R³, R⁴ et R⁵, représente un radical hydrocarboné ramifié, linéaire ou cyclique (mono- ou polycyclique), comportant de 1 à 20 atomes de carbone, et pouvant comporter une ou plusieurs insaturations sous forme de double(s) et/ou triple(s) liaison(s), par exemple et de manière non limitative méthyle, éthyle, propyle, isopropyle, butyle, isobutyle, sec-butyle, tert-butyle, cyclohexyle, benzyle, phényle, vinyle, allyle, et autres ;
- dans les termes « alkoxy, aryloxy, hétéroaryloxy, monoalkylamino et dialkylamino », les définitions des termes alkyl-, aryl- et hétéroaryl-correspondent aux termes génériques définis ci-dessus.

L'ensemble des radicaux dont les définitions figurent ci-dessus peuvent éventuellement être substitués par un ou plusieurs atomes d'halogènes, avantageusement choisis parmi fluor, chlore, brome et iode, par un ou plusieurs radicaux alkyle, alcényle et/ou alcynyle linéaire(s) ou ramifié(s) comportant de 1 à 10 atomes de carbone, par un ou plusieurs radicaux hydroxy, alkoxy, alcényloxy, alcynyloxy, aryle, hétéroaryle, amino, alkylamino, dialkylamino, carboxy, carbonyle, carbonylamino, carbonylalkylamino, carbonyldialkylamino, les substituants pouvant être identiques ou différents.

Dans la formule développée du composé de formule (1) indiquée plus haut, les liaisons en traits « ondulés » indiquent que les deux doubles liaisons peuvent se trouver en configuration *cis* ou *trans*, c'est-à-dire que la phosphine butadiénique de formule (1) peut être de configuration *E* ou *Z*.

Les phosphines butadiéniques obtenues selon le procédé décrit ci-dessus peuvent être spécifiquement de configuration *Z* (formule (1*Z*)) ou de configuration *E* (formule (1*E*)) ou sous forme de mélange en toutes proportions :

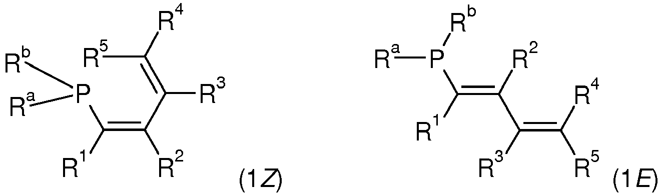

Les isomères *E* et *Z* des phosphines obtenues selon le procédé décrit ci-dessus peuvent être séparés, si nécessaire, selon des méthodes ou procédés classiques et connus de l'homme du métier.

Selon les applications envisagées, on préfère les phosphines butadiéniques de configuration *Z*, ou les phosphines butadiéniques de configuration *E*, ou bien encore les mélanges des phosphines butadiéniques *E* et *Z*, en toutes proportions.

Le procédé décrit ci-dessusest particulièrement bien adapté à la préparation des phosphines butadiéniques de formule (1), de configuration *Z* ou *E*, dans laquelle :
- R^{a} et R^{b}, identiques ou différents, représentent chacun un radical indépendamment choisi parmi alkyle, notamment méthyle, éthyle propyle, butyle ; aryle, notamment phényle ou naphtyle, hétéroaryle, notamment pyridyle ou quinolyle, et de préférence R^{a} et R^{b} sont identiques et représentent chacun phényle ;
- R¹, représente hydrogène ou alkyle, notamment méthyle, éthyle ou propyle, de préférence R¹ représente hydrogène ;
- R², R³ et R⁴, identiques ou différents, sont choisis indépendamment parmi l'hydrogène, un radical alkyle, un radical aryle et un radical hétéroaryle, en particulier parmi l'hydrogène et un radical alkyle, notamment méthyle, éthyle ou propyle ;
- R⁵ est choisi parmi l'hydrogène, un radical alkyle, un radical aryle et un radical hétéroaryle ; de préférence R⁵ représente alkyle, notamment méthyle, éthyle, propyle, butyle ou pentyle, ou bien représente phényle, naphtyle, pyridyle ou quinolyle.

Le procédé décrit ci-dessus permet notamment d'obtenir les phosphines butadiéniques (*Z*)-Ph(C₄H₄)PPh₂, (*E*)-Ph(C₄H₄)PPh₂, (*Z*)-CH₃(C₄H₄)PPh₂ et (*E*)-CH₃Ph(C₄H₄)PPh₂, où Ph représente phényle.

Le procédé décrit ci-dessus permet d'obtenir les phosphines butadiéniques de formule (1) à partir de composés aisément disponibles dans le commerce, ou facilement préparés à partir de modes opératoires connus de la littérature. En outre, le faible nombre d'étapes du procédé permet une mise en oeuvre aisée.

Comme indiqué précédemment, le procédé peut avantageusement être réalisé en une seule opération (« one pot »), c'est-à-dire sans qu'il soit nécessaire d'isoler et/ou de purifier les intermédiaires de synthèse. On peut toutefois isoler et/ou purifier les intermédiaires, par exemple dans le but d'étudier le bon déroulement de la réaction ou sa cinétique, d'analyser les produits intermédiaires formés, et autres.

Les phosphines butadiéniques de formule (1) dont le procédé de préparation est décrit ci-dessus peuvent de manière tout à fait avantageuse être utilisées comme ligands du cuivre pour former des complexes.

En effet, les phosphines butadiéniques présentent un grand intérêt en chimie de coordination et en catalyse, en raison du fait qu'elles combinent deux ligands très importants de la chimie organométallique : les diènes conjugués et les phosphines.

De tels complexes du cuivre avec au moins une phosphine butadiénique de formule (1) telle que définie *supra*, constituent un autre objet de la présente invention, selon la revendication 14.

Les complexes selon la revendication 14 peuvent être représentés schématiquement sous la forme Pho-Bu/Cu, où Pho-Bu représente une phosphine butadiénique de formule (1) définie plus haut, et Cu représente un atome de cuivre. Cette représentation schématique n'indique en aucune façon le nombre de moles de phosphine butadiénique présentes par rapport au nombre d'atomes de cuivre présent.

On appelle « complexe monomère », un complexe Pho-Bu/Cu qui comporte un atome de cuivre, « complexe dimère », un complexe Pho-Bu/Cu qui comporte deux atomes de cuivre, « complexe trimère », un complexe Pho-Bu/Cu qui comporte trois atomes de cuivre, etc.
L'invention concerne également les complexes monomère phényl ou méthyl butadiényldiphénylphosphine/iodure de cuivre [Ph-CH=CH-CH=CH-PPh₂]₂CuI (complexe iodo di-{η-(4-phényl-1,3-butadiényl diphénylphosphine)}cuivre), et [CH₃-CH=CH-CH=CH-PPh₂]₂CuI (complexe iodo di-{η-(4-méthyl-1,3-butadiényl diphénylphosphine)}cuivre), où Ph représente le radical phényle.

Les complexes Pho-Bu/Cu définis ci-dessus peuvent être préparés selon des techniques classiques connues de l'homme du métier. Par exemple, les complexes Pho-Bu/Cu peuvent être préparés par mise en contact d'au moins une phosphine butadiénique, notamment de formule (1) définie *supra*, avec le cuivre métallique ou un dérivé du cuivre (cuivre(I) ou cuivre(II)), par exemple un halogénure de cuivre, tel que l'iodure, le bromure ou le chlorure cuivrique ou cuivreux, ou d'autres dérivés, notamment les composés organo-cuivrés, par exemple l'acétylacétonate de cuivre.

La réaction est généralement effectuée sous atmosphère inerte, par exemple sous azote ou argon, en milieu solvant organique, de préférence un solvant polaire aprotique, par exemple l'acétonitrile. La réaction de complexation est habituellement conduite à une température comprise entre 0°C et 80°C, selon la nature des composés en présence, et généralement la température de réaction est la température ambiante.

Le complexe est généralement obtenu sous la forme d'un précipité qui est isolé du milieu réactionnel selon des techniques connues en soi, par exemple par filtration, et éventuellement recristallisation dans un solvant, avantageusement identique à celui utilisé pour la réaction de complexation.

Selon une variante, le complexe Pho-Bu/Cu peut être avantageusement préparé *in situ* dans le milieu réactionnel de la réaction catalysée par le complexe Pho-Bu/Cu. Une telle variante est illustrée dans les exemples d'arylation (Exemples C) qui suivent.

De part leur très grand intérêt en catalyse, les complexes cuivre/phosphine butadiénique, notamment ceux de configuration *Z*, trouvent une application tout à fait adaptée en tant que système catalytique pour les réactions de création de liaisons carbone-carbone (C-C) ou carbone-hétéroatome (C-HE) selon le procédé dit de Ullmann (F. Ullmann et H. Kipper, Ber. dtsch. Chem. Ges., 1095, 38, 2120-2126).

La réaction de Ullmann catalysée au cuivre est une des méthodes les plus utilisées dans l'industrie en raison du coût attractif du cuivre, en comparaison avec les coûts d'autres métaux noble tels que le palladium, le ruthénium, et autres.

Récemment, Buchwald et coll. (J. Am. Chem. Soc., 2001, 123, 7727-7729) ont proposé d'utiliser des ligands classiques du cuivre pour réaliser cette réaction catalysée au cuivre. La demande de brevet internationale WO-A-03/101966 décrit des ligands du cuivre permettant une réaction de type Ullmann dans des conditions douces, avec des quantités catalytiques de cuivre. Ces ligands sont principalement des ligands de type oxime qui requièrent une synthèse spécifique et conduisent par conséquent à des produits de réaction relativement onéreux.

Ainsi, un autre objectif est de fournir des ligands du cuivre faciles à préparer et conduisant à des coûts réactionnels inférieurs à ceux engendrés jusqu'à présent pour des réactions de couplage de type Ullmann. Comme autre objectif, la présente invention vise à obtenir des rendements de synthèse encore améliorés par rapport aux rendements obtenus avec les procédés connus dans le domaine.

Selon un autre aspect, la présente invention concerne un procédé de création de liaison carbone-carbone (C-C) ou de liaison carbone-hétéroatome (C-HE) selon les revendications 1 à 13 et 15 en faisant réagir un composé porteur d'un groupement partant avec un composé nucléophile porteur d'un atome de carbone ou d'un hétéroatome (HE) susceptible de se substituer au groupement partant, créant ainsi une liaison C-C ou C-HE, procédé dans lequel la réaction est réalisée en présence d'une quantité efficace d'un système catalytique comprenant au moins un complexe cuivre/phosphine butadiénique.

Les inventeurs ont à présent découvert que des systèmes catalytiques à base de cuivre complexé par une phosphine butadiénique permettent d'effectuer la création de liaison carbone-carbone (C-C) ou de liaison carbone-hétéroatome (C-HE) en faisant réagir un composé porteur d'un groupement partant avec un composé nucléophile porteur d'un atome de carbone ou d'un hétéroatome (HE) susceptible de se substituer au groupement partant, créant ainsi une liaison C-C ou C-HE.

Le schéma général du procédé selon la présente invention peut être illustré comme suit : 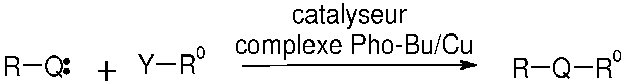 dans lequel :
- Y-R⁰ représente un composé porteur d'un groupe partant Y, R⁰ ayant la définition ci-dessous ; et
- R-Q: représente un composé nucléophile, R étant le résidu dudit composé nucléophile, et Q étant un atome de carbone ou un hétéroatome (HE) qui peut se substituer audit groupe partant Y.

Selon une première variante du procédé de la présente invention, on réalise une réaction d'arylation en faisant réagir un composé aromatique porteur d'un groupe partant avec un composé nucléophile.

Selon une autre variante du procédé de l'invention, on réalise une réaction de vinylation ou d'alcynation en faisant réagir respectivement un composé comportant une double liaison ou une triple liaison en position α d'un groupe partant, avec un composé nucléophile.

Dans l'exposé qui suit de la présente invention, le terme « arylation » est utilisé dans son sens large, puisqu'on envisage la mise en oeuvre d'un composé insaturé porteur d'un groupement partant qui est soit de type aliphatique insaturé, soit de type aromatique carbocyclique ou hétérocyclique.

Par « composé nucléophile », on entend généralement un composé organique hydrocarboné aussi bien acyclique que cyclique ou polycyclique et dont la caractéristique est de comprendre au moins un atome porteur d'un doublet libre, qui peut comprendre ou non une charge, et de préférence, un atome d'azote, d'oxygène, de soufre, de bore ou de phosphore, ou comprend un atome de carbone qui peut donner sa paire d'électrons.

Comme mentionné précédemment, le composé nucléophile comprend généralement au moins un atome porteur d'un doublet libre qui peut être apporté par un groupe fonctionnel et/ou un carbanion.

À titre de groupes fonctionnels et/ou de carbanions comprenant ledit au moins un atome, il est connu les atomes et groupes suivants : 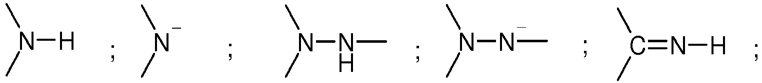 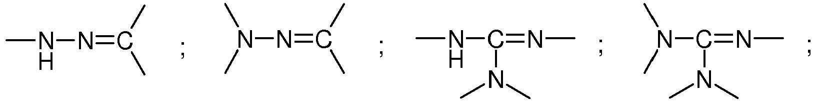 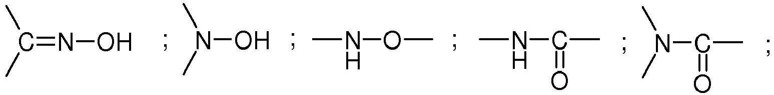 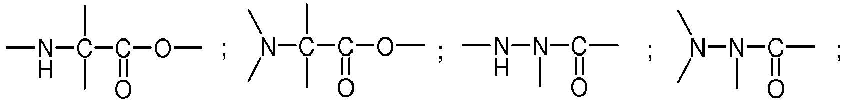 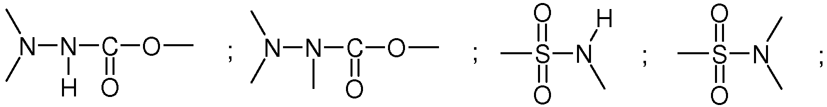 -O-H ; -O⁻ ; -S- -S⁻ ; 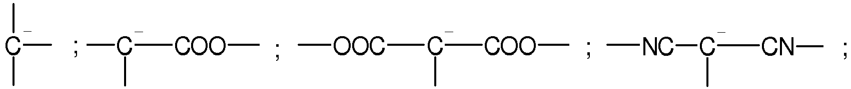 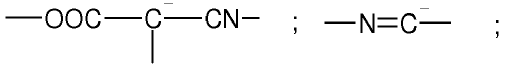 ; N≡C⁻ ; 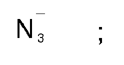 N(CN)₂⁻ ; P(CN)₂⁻ ; C(CN)₃⁻ ; C(CN)₂NO⁻ ; NCO⁻ ; NCS⁻ ; NSO⁻ ; CNO⁻ ; N≡C- ; -C≡C⁻ ;

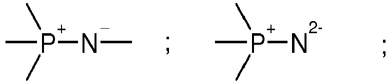

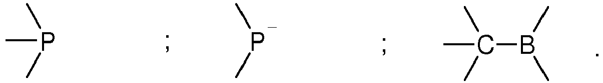

Le composé nucléophile comprend généralement au moins un atome d'azote porteur d'un doublet libre inclus dans un cycle saturé, insaturé ou aromatique; le cycle comprend généralement de 3 à 8 atomes.

Il est à noter que lorsque le composé nucléophile comprend un groupe fonctionnel, dont des exemples sont donnés ci-dessus, et qui porte une ou plusieurs charges négatives, ledit composé se trouve alors sous une forme salifiée. Le contre-ion est généralement un cation métallique, tel qu'un métal alcalin, de préférence le lithium, le sodium ou le potassium, ou un métal alcalino-terreux, de préférence le calcium, ou le reste d'un composé organométallique, tel que notamment magnésien ou zincique.

Un premier avantage du procédé de l'invention est d'effectuer la réaction à température modérée.

Un autre avantage est de pouvoir utiliser une large gamme d'agents de couplage, en particulier d'agents d'arylation, de nucléophiles, non seulement les iodures, mais aussi les bromures, les chlorures ou les triflates, notamment les iodures d'aryle, les bromures d'aryle, les chlorures d'aryle ou les triflates d'aryle.

Un autre intérêt du procédé de l'invention est de faire appel à une catalyse par le cuivre plutôt que le palladium ou le nickel, c'est-à-dire un catalyseur moins toxique et apportant en outre un avantage du point de vue économique.

Le procédé de l'invention intéresse un nombre important de composés nucléophiles et des exemples sont donnés ci-après, à titre illustratif, et sans aucun caractère limitatif.

La présente invention concerne la mise en oeuvre du procédé sur les nucléophiles suivants :
- les composés de formule R²⁵-NH-CO-R²⁶ dans laquelle R²⁵ et R²⁶ identiques ou différents, sont choisi parmi l'hydrogène, un radical phényle ou naphtyle ;
- Les composés de formule 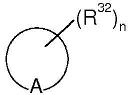 dans laquelle
   o A représente l'un des cycles suivants :
      - un hétérocycle monocyclique comprenant un ou plusieurs hétéroatomes 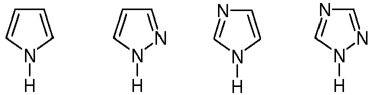 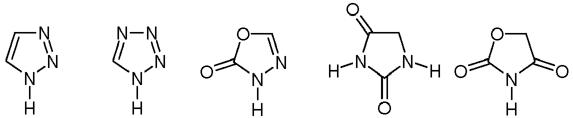 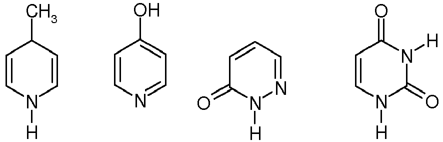
      - un bicycle comprenant un carbocycle et un hétérocycle comprenant un ou plusieurs hétéroatomes : 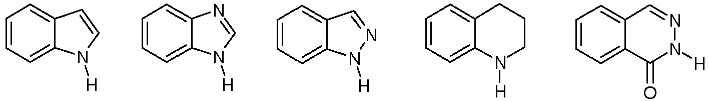
      - un tricycle comprenant au moins un carbocycle ou un hétérocycle comprenant un ou plusieurs hétéroatomes : 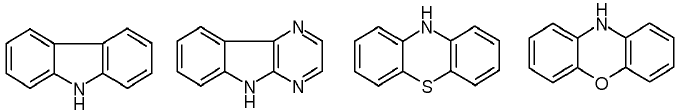
   ∘ R³², identique(s) ou différent(s), est choisi parmi :
      - un groupe alkyle, linéaire ou ramifié, de C1 à C6;
      - un groupe alcényle ou alcynyle, linéaire ou ramifié, de C2 à C6;
      - un groupe alkoxy ou thioéther linéaire ou ramifié, de C1 à C6;
      - un groupe cyclohexyle, phényle ou benzyle ;
      - un groupe choisi parmi hydroxyle, thiol, nitrile, azoture, nitro, halogène ou trifluorométhyle ;
   o n représente 0, 1, 2, 3 ou 4 ;

Les composés de formule R³³ - Z, dans laquelle R³³ représente un radical phényle ou naphtyle; Z représente un groupe OH.Comme exemples de composés de formule R²⁵-NH-CO-R²⁶ on peut citer l'oxazolidine-2-one, le benzamide et l'acétamide.

Le ou les groupes R³², identiques ou différents, représentent préférentiellement l'un des groupes suivants :
- un groupe alkyle, linéaire ou ramifié, de C₁ à C₄ atomes de carbone, tel que méthyle, éthyle, propyle, isopropyle, butyle, isobutyle, sec-butyle, tert-butyle ;
- un groupe alcényle ou alcynyle, linéaire ou ramifié, de C₂ àC₄, tel que vinyle, allyle ;
- un groupe alkoxy ou thioéther linéaire ou ramifié, de C₁ à C₄ tel que les groupes méthoxy, éthoxy, propoxy, isopropoxy, butoxy, un groupe alcényloxy, de préférence, un groupe allyloxy ou un groupe phénoxy ;
- un groupe cyclohexyle, phényle ou benzyle ;
- un groupe choisi parmi hydroxyle, thiol, nitrile, azoture, nitro, halogène ou trifluorométhyle.

La présente invention s'applique tout particulièrement aux composés répondant dans lesquels le ou les groupes R³² représentent plus particulièrement un groupe alkyle ou alkoxy.

Comme exemples de composés hétérocycliques, on préfère utiliser ceux dans lesquels A représente un cycle tel que imidazole, pyrazole, triazole, pyrazine, oxadiazole, oxazole, tétrazole, indole, pyrrole, phtalazine, pyridazine, oxazolidine.

R³³ peut être également substitué. La nature du substituant peut être quelconque dans la mesure où il n'interfère pas avec la réaction principale. Le nombre de substituants est généralement au plus de 4 par cycle mais le plus souvent égal à 1 ou 2. On peut se référer à la définition de R³² ci-dessus.

La présente demande divulgue également d'autres composés nucléophiles notamment les dérivés organiques azotés et plus particulièrement les amines primaires ou secondaires ; les dérivés d'hydrazine ou d'hydrazone ; les amides ; les sulfonamides; les dérivés de l'urée ; les dérivés hétérocycliques de préférence azotés et/ou soufrés.

Plus précisément, les amines primaires ou secondaires peuvent être représentées par la formule générale (la) : 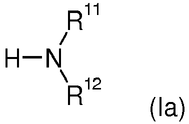 dans laquelle formule (Ia) :
R¹¹ et R¹², identiques ou différents, sont choisi parmi l'hydrogène, un radical hydrocarboné (1 à 20 atomes de carbone, comme défini précédemment), un radical aryle, un radical hétéroaryle, ainsi que parmi un enchaînement quelconque de deux ou plusieurs des groupes précités, étant entendu que au plus l'un des groupes R¹¹ et R¹² représente l'atome d'hydrogène.

Les amines mises en oeuvre préférentiellement répondent à la formule (la) dans laquelle R¹¹ et R¹², identiques ou différents, représentent un groupe alkyle en C₁ à C₁₅, de préférence en C₁ à C₁₀, un groupe cycloalkyle en C₃ à C₈, de préférence en C₅ ou en C₆, ou un groupe aryle ou arylalkyle en C₆ à C₁₂.

Comme exemples plus particuliers de groupes R¹¹ et R¹², on peut mentionner les groupes alkyle en C₁ à C₄, phényle, naphtyle ou benzyle.

Comme exemples plus spécifiques d'amines de formula (la), on peut mentionner l'aniline, la N-méthylaniline, la diphénylamine, la benzylamine et la dibenzylamine.

Il n'est pas exclu la présence d'une ou plusieurs insaturations dans la (ou les) chaîne(s) hydrocarbonée(s), telles que une ou plusieurs double et/ou triple liaisons, qui peuvent être conjuguées ou non conjuguées.

La (ou les) chaîne(s) hydrocarbonée(s) peu(ven)t être également interrompue(s) par un plusieurs hétéroatomes (par exemple oxygène, soufre, azote, phosphore), et/ou par un groupe fonctionnel non-réactif, tel que par exemple -CO-.

Il est à noter que le groupe amino peut sous forme d'anions. Le contre-ion est alors un cation métallique, de préférence un cation de métal alcalin, et plus préférentiellement le sodium ou le potassium. Comme exemples de tels composés, on peut citer l'amidure de sodium ou de potassium.

La chaîne hydrocarbonée peut éventuellement porter un ou plusieurs substituants, comme indiqué précédemment, et en particulier des atomes, groupes ou radicaux choisis parmi halogène, ester, amino ou alkyle et/ou arylphosphine, dans la mesure où 'ils n'interfèrent pas.

Les groupes aliphatiques acycliques, linéaires ou ramifiés, saturés ou insaturés, peuvent éventuellement porter un substituant cyclique. Le terme « cycle » désigne un cycle carbocyclique ou hétérocyclique, saturé, insaturé ou aromatique.

Le groupe aliphatique acyclique peut être relié au cycle par un lien valentiel, un hétéroatome ou un groupe fonctionnel tels que oxy, carbonyle, carboxyle, sulfonyle etc.

Comme exemples de substituants cycliques, on peut envisager des substituants cycloaliphatiques, aromatiques ou hétérocycliques, notamment cycloaliphatiques comprenant 6 atomes de carbone dans le cycle ou benzéniques, ces substituants cycliques étant eux-mêmes éventuellement porteurs d'un substituant quelconque dans la mesure où ils ne gênent pas les réactions intervenant dans le procédé de l'invention. On peut mentionner en particulier, les groupes alkyle, alkoxy en C₁ à C₄.

Parmi les groupes aliphatiques porteurs d'un substituant cyclique, on vise plus particulièrement les groupes cycloalkylalkyle, par exemple, cyclohexylalkyle ou les groupes arylalkyle de préférence en C₇ à C₁₂, notamment benzyle ou phényléthyle.

Dans la formule générale (la), les groupes R¹¹ et R¹² peuvent représenter également indépendamment l'un de l'autre un groupe carbocyclique saturé ou comprenant 1 ou 2 insaturations dans le cycle, généralement en C₃ à C₈, de préférence à 6 atomes de carbone dans le cycle ; ledit cycle pouvant être substitué. Comme exemples préférés de ce type de groupes, on peut citer les groupes cyclohexyle éventuellement substitués notamment par des groupes alkyles linéaires ou ramifiés, ayant de 1 à 4 atomes de carbone.

Les groupes R¹¹ et R¹² peuvent représenter indépendamment l'un de l'autre, un groupe hydrocarboné aromatique, et notamment benzénique répondant à la formule générale (F₁) : 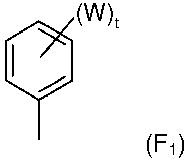 dans laquelle :
- t représente 0, 1, 2, 3, 4 ou 5 ; et
- W représente un groupe choisi parmi alkyle en C₁-C₆ linéaire ou ramifié, alkoxy en C₁-C₆ linéaire ou ramifié, alkylthio en C₁-C₆ linéaire ou ramifié, -NO₂, -CN, halogène, et CF₃.

Le groupe hydrocarboné aromatique peut donc être substitué. W illustre certains types de substituants préférés mais l'énumération n'est pas limitative.

R¹¹ et R¹² peuvent également représenter indépendamment l'un de l'autre un groupe hydrocarboné aromatique polycyclique avec les cycles pouvant former entre eux des systèmes *ortho*-condensés, *ortho-* et *péri-*condensés. On peut citer plus particulièrement un groupe naphtyle, ledit cycle pouvant être substitué.

R¹¹ et R¹² peuvent également représenter indépendamment l'un de l'autre un groupe hydrocarboné polycyclique constitué par au moins 2 carbocycles saturés et/ou insaturés ou par au moins 2 carbocycles dont l'un seul d'entre eux est aromatique et formant entre eux des systèmes *ortho-* ou *ortho*- et *péri*-condensés. Généralement, les cycles sont en C₃ à C₈, de préférence en C₆. Comme exemples plus particuliers, on peut citer le groupe bornyle ou le groupe tétrahydronaphtalène.

R¹¹ et R¹² peuvent également représenter indépendamment l'un de l'autre un groupe hétérocyclique, saturé, insaturé ou aromatique, comportant notamment 5 ou 6 atomes dans le cycle dont un ou deux hétéroatomes tels que les atomes d'azote (non substitué par un atome d'hydrogène), de soufre et d'oxygène ; les atomes de carbone de cet hétérocycle pouvant également être substitués.

R¹¹ et R¹² peuvent aussi représenter un groupe hétérocyclique polycyclique défini comme étant soit un groupe constitué d'au moins deux hétérocycles aromatiques ou non contenant au moins un hétéroatome dans chaque cycle et formant entre eux des systèmes *ortho-* ou *ortho-* et *péri-*condensés, ou soit un groupe constitué par au moins un cycle hydrocarboné aromatique ou non et au moins un hétérocycle aromatique ou non formant entre eux des systèmes *ortho*- ou *ortho-* et *péri*-condensés ; les atomes de carbone desdits cycles pouvant éventuellement être substitués.

À titre d'exemples de groupes R¹¹ et R¹² de type hétérocyclique, on peut citer entre autres, les groupes furyle, thiényle, isoxazolyle, furazannyle, isothiazolyle, pyridyle, pyridazinyle, pyrimidinyle, pyrannyle, phosphino et les groupes quinolyle, naphtyridinyle, benzopyrannyle, benzofurannyle.

Le nombre de substituants présents sur chaque cycle dépend de la condensation en carbone du cycle et de la présence ou non d'insaturation sur le cycle. Le nombre maximum de substituants susceptibles d'être portés par un cycle est aisément déterminé par l'homme du métier.

La présente demande divulgue également d'autres composés nucléophiles susceptibles par exemple les dérivés de l'hydrazine répondant à la formule (Ib) : 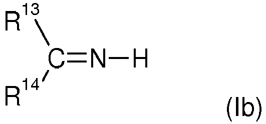 dans laquelle :
- R¹³ et R¹⁴, identiques ou différents, ont la signification donnée pour R¹¹ et R¹² dans la formule (la), et au plus l'un des groupes R³ et R⁴ représente l'atome d'hydrogène.

Les groupes R¹³ et R¹⁴ représentent plus particulièrement un groupe alkyle de C₁ à C₁₅, de préférence de C₁ àC₁₀, un groupe cycloalkyle de C₃ à C₈, de préférence en C₅ ou C₆, un groupe aryle ou arylalkyle de C₆ à C₁₂. De préférence encore, R¹³ et R¹⁴ représentent un groupe alkyle en C₁ à C₄, phényle, benzyle ou naphtyle.

Comme autres nucléophiles, la demadne divulgue les oximes et les hydroxylamines, qui peuvent être représentées par les formules générales (Ic) et (Id) respectivement : 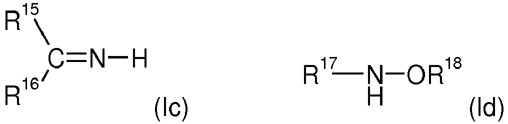 formules dans lesquelles :
- R¹⁵ et R¹⁶, identiques ou différents, possèdent les définitions données pour R¹¹ et R¹² dans la formule (la), et au plus l'un des groupes R¹⁵ et R¹⁶ représente l'atome d'hydrogène.
- R¹⁷ possède les définitions données pour R¹¹ ou R¹² dans la formule (la), l'atome d'hydrogène excepté ; et
- R¹⁸ est choisi parmi l'atome d'hydrogène, un groupe aliphatique acyclique linéaire ou ramifié, saturé ou insaturé, et un groupe carbocyclique monocyclique ou polycyclique, saturé ou insaturé ; ainsi que parmi un enchaînement quelconque de deux ou plusieurs desdits groupes.

Des exemples préférés d'oximes ou d'hydroxylamines de formules (Ic) et (Id), respectivement, sont ceux pour lesquels R¹⁵, R¹⁶ et R¹⁷ représentent alkyle en C₁ à C¹⁵, de préférence en C₁ à C₁₀ ; cycloalkyle en C₃ à C₈, de préférence en C₅ ou C₆ ; ou aryle ou arylalkyle en C₆ à C₁₂.

Comme exemples plus particuliers de groupes R¹⁵, R¹⁶ et R¹⁷, on peut mentionner les groupes alkyle en C₁ à C₄, phényle, naphtyle ou benzyle. Quant à R¹⁸, il représente de préférence alkyle en C₁ à C₄ ou benzyle.

La demande divulgue également des composés nucléophiles de type hydrazine, qui peuvent être représentés par la formule (le) suivante : 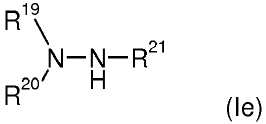 dans laquelle :
- R¹⁹, R²⁰ et R²¹ identiques ou différents, possèdent les définitions données pour R¹¹ et R¹² dans la formule (la) ;
- R²¹ représente l'atome d'hydrogène ou un groupement protecteur G ; et
- au moins un des groupes R¹⁹, R²⁰ et R²¹ ne représente pas l'atome d'hydrogène ;
- ou bien R¹⁹ et R²⁰ peuvent former ensemble, et avec l'atome d'azote qui les porte, un groupe hétérocyclique en C₃-C₂₀, monocyclique ou polycyclique, saturé, insaturé ou aromatique.

Des hydrazines préférées de formule (le) ci-dessus, sont celles dans lesquelles R¹⁹ et R²⁰, identiques ou différents, représentent alkyle en C₁-C₁₅, de préférence en C₁-C₁₀ ; groupe cycloalkyle en C₃-C₈, de préférence en C₅ ou C₆ ; ou aryle ou arylalkyle en C₆-C₁₂- Plus préférentiellement, les hydrazines sont celles de formule (le), dans laquelle R¹⁹ et R²⁰ identiques ou différents, représentent alkyle en C₁ à C₄, phényle, benzyle ou naphtyle.

R¹⁹ et R²⁰ peuvent être reliés ensemble, de manière à former, ave l'atome d'azote qui les porte, un groupe hétérocyclique en C₃-C₂₀, monocyclique ou polycyclique, saturé, insaturé ou aromatique, comprenant deux ou trois cycles *ortho*-condensés, c'est-à-dire au moins deux cycles qui ont deux atomes de carbone en commun.

Pour les composés polycycliques, le nombre d'atomes de chaque cycle peut varier de préférence entre 3 et 6. Selon un mode de réalisation préféré, R¹⁹ et R²⁰ forment ensemble un cycle cyclohexane ou fluorénone.

Dans la formule (le) ci-dessus, R²¹ représente de préférence l'atome d'hydrogène, alkyle (de préférence C₁-C₁₂), alcényle ou alcynyle (de préférence C₂-C₁₂), cycloalkyle (de préférence C₃-C₁₂), aryle ou arylalkyle (de préférence C₆-C₁₂). De préférence encore, R²¹ représente l'atome d'hydrogène ou un groupe alkyle en C₁-C₄.

Il doit être noté que lorsque le composé nucléophilie comprend un groupe NH₂, les deux atomes d'hydrogène peuvent réagir. Dans un tel cas, et afin d'augmenter la sélectivité de la réaction, l'un ou les deux atomes d'hydrogène peuvent avantageusement être bloqués, par l'utilisation de groupe protecteur. De tels groupes protecteurs sont bien connus dans le domaine, et on peut citer les groupes protecteurs couramment utilisés, tels que par exemple les groupes acyle (acétyle, benzoyle), BOC (butoxy-carbonyle), CBZ (carbobenzoxy), FMOC (trifluorométhyloxycarbonyle) ou MSOC (méthanesulfényl-2-éthoxycarbonyle). On pourra à ce sujet se reporter par exemple à l'ouvrage de T. W. Greene et coll., Protective Groups in Organic Synthesis, 2e édition, John Wiley & Sons, Inc., en ce qui concerne les réactions de protection et de déprotection des groupes amino.

D'autres composés nucléophiles divulgués par la demande sont les composés de type hydrazone, qui peuvent être représentés par la formule (If) : 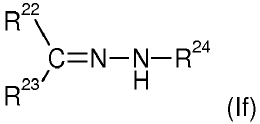 dans laquelle :
- R²², R²³ et R²⁴, identiques ou différents, possèdent les définitions données pour R¹¹ et R¹² dans la formule (la) ;
- au plus l'un des groupes R²² et R²³ représente l'atome d'hydrogène ;
- ou bien R²² et R²³ peuvent former ensemble, et avec l'atome d'azote qui les porte, un groupe carbocyclique ou hétérocyclique en C₃-C₂₀, monocyclique ou polycyclique, saturé, insaturé ou aromatique.

Des exemples préférés d'hydrazones de formule (If) ci-dessus, sont celles dans lesquelles R²² et R²³, identiques ou différents, représentent alkyle en C₁-C₁₅, de préférence en C₁-C₁₀ ; un groupe cycloalkyle en C₃-C₈, de préférence en C₅ or C₆ ;ou aryle ou arylalkyle en C₆-C₁₂. Plus préférentiellement, des exemples d'hydrazones de formule (If), sont celles dans lesquelles R²² et R²³, identiques ou différents, représentent alkyle en C₁ à C₄, phényle, benzyle ou naphtyle.

R²² et R²³ peuvent former ensemble, et avec l'atome d'azote qui les porte, un groupe carbocyclique ou hétérocyclique en C₃-C₂₀, monocyclique ou polycyclique, saturé, insaturé ou aromatique, comprenant deux ou trois cycles *ortho*-condensés.

Pour les composés polycycliques, le nombre d'atomes de chaque cycle peut varier, de préférence entre 3 et 6. Selon un mode de réalisation préféré, R²² et R²³ forment ensemble un cycle cyclohexane ou fluorénone.

Dans la formule (If) ci-dessus, R²⁴ représente de préférence l'atome d'hydrogène, un groupe alkyle (de préférence en C₁-C₁₂), alcényle ou alcynyle (de préférence en C₂-C₁₂), cycloalkyle (de préférence C₃-C₁₂), aryle ou arylalkyle (de préférence C₆-C₁₂). De préférence encore, R²⁴ représente l'atome d'hydrogène ou un groupe alkyle en C₁-C₄.

Des composés de type sulfonamide qui peuvent par exemple répondre à la formule (Ih), cont divulgués comme nucléophile :

R²⁷-SO₂-NH-R²⁸ (Ih)

dans laquelle R²⁷ et R²⁸ ont la signification donnée pour R¹¹ et R¹² dans la formule (la).

Comme exemples de composés de formule (Ih), on peut citer le tosylhydrazide.

Comme autres types de substrats nucléophiles, la demande divulgue les dérivés de l'urée tels que les guanidines et qui peuvent être représentés par la formule(li) : 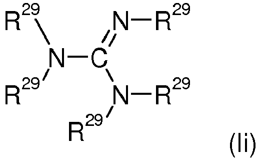 dans ladite formule (Ii), les groupes R²⁹, identiques ou différents, ont la signification donnée pour R¹¹ et R¹² dans la formule (la).

Comme exemples de composés de formule (Ii), on peut citer la N,N,N',N'-tétraméthylguanidine.

D'autres exemples encore de composés nucléophiles comprennent les acides aminés et leurs dérivés, par exemple ceux répondant à la formule (Ij) suivante : 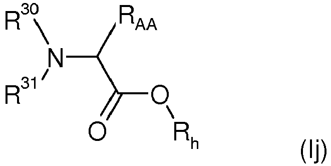 dans laquelle :
- R_{AA} représente l'atome d'hydrogène ou le résidu d'un acide aminé, de préférence l'atome d'hydrogène ; un alkyle linéaire ou ramifié en C₁-C₁₂ portant éventuellement un groupe fonctionnel ; aryle ou arylalkyle en C₆-C₁₂ ; ou un groupe fonctionnel, de préférence un groupe hydroxyle ;
- R³⁰ et R³¹ possèdent les définitions données R¹¹ et R¹² dans la formule (Ia) ;
- Rₕ représente l'atome d'hydrogène ; un cation métallique, de préférence un cation de métal alcalin ; ou un groupe hydrocarboné en C₁-C₁₂, de préférence alkyle en C₁-C₁₂.

Selon un mode de réalisation, R_{AA} dans la formule (Ij) ci-dessus représente alkyle, éventuellement comportant un groupe fonctionnel, par exemple -OH, -NH₂, -CO-NH₂, -NH-CNH-, -HN-C(O)-NH₂, -COOH, -SH, -S-CH₃, ou un groupe imidazole, pyrrole, ou pyrazole.

Des exemples de tels acides aminés comprennent la glycine, la cystéine, l'acide aspartique, l'acide glutamique, l'histidine.

La demande divulgue également les dérivés hétérocycliques comprenant au moins un atome nucléophile tel qu'un atome d'azote, de soufre ou de phosphore, comme composés nucléophiles.

Sont également divulgués les composés nucléophiles de formule (Im₁) : 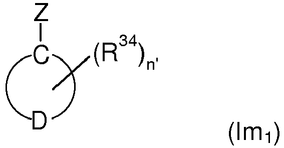 dans laquelle :
- D symbolise le reste d'un groupe carbocyclique aromatique, monocyclique ou polycyclique ou un groupe divalent constitué par un enchaînement quelconque de deux ou plusieurs groupes carbocycliques aromatiques monocycliques ;
- R³⁴ représente un ou plusieurs substituants, identiques ou différents ;
- Z représente un groupe de type OM¹ ou SM¹ dans lequel M¹ représente un atome d'hydrogène ou un cation métallique, de préférence un cation de métal alcalin ; et
- n' représente 0, 1, 2, 3, 4 or 5.

Comme exemples de substituants R³⁴, on peut se référer à ceux identifiés sous R³² définis dans la formule (Ik).

Parmi les composés de formule (Im₁), cont particulièrement divulgués ceux dont le reste (D) représente :
- un groupe carbocyclique aromatique monocyclique ou polycyclique avec des cycles pouvant former entre eux un système *ortho*-condensé répondant à la formule (F₁₁) : 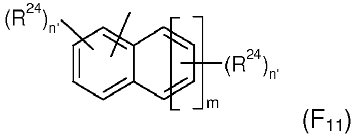 dans ladite formule (F₁₁), m représente un nombre égal à 0, 1 ou 2, les symboles R³⁴ et n', identiques ou différents, ayant la signification donnée précédemment ;
- un groupe constitué par un enchaînement de deux ou plusieurs groupes carbocycliques aromatiques monocycliques répondant à la formule (F₁₂) : 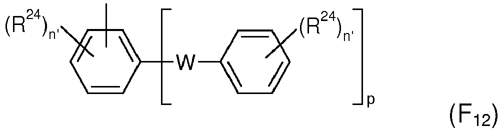
dans ladite formule (F₁₂), les symboles R³⁴ et n', identiques ou différents, ont la signification donnée précédemment, p est un nombre égal à 0, 1, 2 ou 3, et W représente un lien valentiel, un groupe alkylène ou alkylidène de C₁ à C₄, de préférence un groupe méthylène ou isopropylidène, ou un groupe fonctionnel tel que oxy, carbonyle, carboxy, sulfonyle, et autres.

Les composés de formule (Im) répondent généralement aux formules (F₁₁) et (F₁₂) dans lesquelles :
- R³⁴ représente un atome d'hydrogène, un groupe hydroxyle, un groupe -CHO, un groupe-NO2, un groupe alkyle ou alkoxy linéaire ou ramifié ayant de 1 à 6 atomes de carbone, de préférence, de 1 à 4 atomes de carbone, et plus préférentiellement méthyle, éthyle, méthoxy ou éthoxy ;
- W symbolise un lien valentiel, un groupe alkylène ou alkylidène ayant de 1 à 4 atomes de carbone, ou un atome d'oxygène ;
- m est égal à 0 ou 1 ;
- n' est égal à 0, 1 ou 2 ; et
- p est égal à 0 ou 1.

À titre illustratif de composés répondant à la formule (Im) divulgué, on peut mentionner plus particulièrement :
- ceux dans lesquels le reste D répond à la formule (F₁₁) dans laquelle m et n' sont égaux à 0, tels que le phénol, le thiophénol ;
- ceux dans lesquels le reste D répond à la formule (F₁₁) dans laquelle m est égal à 0 et n' est égal à 1, tels que l'hydroquinone, la pyrocatéchine, la résorcine, les alkylphénols, les alkylthiophénols, les alkoxyphénols, l'aldéhyde salicylique, le *para*-hydroxybenzaldéhyde, le salicylate de méthyle, l'ester méthylique de l'acide *para*-hydroxybenzoïque, les chlorophénols, les nitrophénols, le *para*-acétamidophénol ;
- ceux dans lesquels le reste D répond à la formule (F₁₁) dans laquelle m est égal à 0 et n' est égal à 2, tels que les dialkylphénols, la vanilline, l'isovanilline, le 2-hydroxy-5-acétamidobenzaldéhyde, le 2-hydroxy-5-propionamidobenzaldéhyde, le 4-allyloxybenzaldéhyde, les dichlorophénols, la méthylhydroquinone, la chlorohydroquinone ;
- ceux dans lesquels le reste D répond à la formule (F₁₁) dans laquelle m est égal à 0 et n' est égal à 3, tels que la 4-bromovanilline, la 4-hydroxy-vanilline, les trialkylphénols, le 2,4,6-trinitrophénol, le 2,6-dichloro-4-nitrophénol, les trichlorophénols, les dichlorohydroquinones, ou le 3,5-diméthoxy-4-hydroxybenzaldéhyde ;
- ceux dans lesquels le reste D répond à la formule (F₁₁) dans laquelle m est égal à 1 et n' est supérieur ou égal à 1, tels que le dihydroxynaphtalène, le 4-méthoxynapht-1-ol, le 6-bromonapht-2-ol ;
- ceux dans lesquels le reste D répond à la formule (F₁₂) dans laquelle p est égal à 1 et n' est supérieur ou égal à 1, tels que le 2-phénoxyphénol, le 3-phénoxyphénol, la phénylhydroquinone, le 4,4'-dihydroxybiphényle, l'isopropylidène-4,4'-diphénol (bisphénol A), le bis(4-hydroxyphényl)-méthane, la bis(4-hydroxyphényl)sulfone, le bis(4-hydroxyphényl)-sulfoxyde, le tétrabromo-bisphénol A.

Parmi les autres composés nucléophiles appartenant à des familles totalement différentes et qui sont divulgués dans la présente demande, on peut mentionner les composés contenant du phosphore, ainsi que les composés contenant du phosphore et de l'azote, de préférence ceux répondant aux formules suivantes :
- les phosphures de formule

   (R³⁵)₂-P⁻ (In);
- les phosphines de formule

   (R³⁵)₃-P (Io);
- les azayldiures de phosphonium de formule

   (R³⁵)₃-P⁺-N²⁻ (Ip);
- les azaylures de phosphonium de formule

   (R³⁵)₃-P⁺-N⁻-R³⁶ (Iq);

   dans lesquelles formules (In) to (Iq), les groupes R³⁵, identiques ou différents, et le groupe R³⁶ représentent :
   - alkyle en C₁-C₁₂ ;
   - cycloalkyle en C₅-C₆ ;
   - cycloalkyle en C₅-C₆ substitué par u ou plusieurs groupes alkyle en C₁-C₄ ou groupes alkoxy en C₁-C₄ ;
   - phénylalkyle, dont la partie aliphatique possède de 1 à 6 atomes de carbone ;
   - phényle ; ou
   - phényle substitué par un ou plusieurs groupes alkyle en C₁-C₄ ou groupes alkoxy en C₁-C₄, ou par ou plusieurs atome(s) d'halogène.

Comme composés contenant du phosphore particulièrement préférés, on peut mentionner la tricyclohexylphosphine, la triméthylphosphine, la triéthylphosphine, la tri-*n*-butylphosphine, la tri-*iso*-butylphosphine, la tri-*tert*-butylphosphine, la tribenzylphosphine, la dicyclohexylphénylphosphine, la triphénylphosphine, la diméthylphényl-phosphine, la diéthylphénylphosphine, la di-*tert*-butylphénylphosphine.

D'autres composés divulgués comme nucléophiles dans la présente demande sont les dérivés hydrocarbonés comprenant un carbone nucléophile.

On peut citer plus particulièrement les anions de type malonate comprenant un groupe -OOC-HC⁻-COO-.

On peut mentionner les anions malonates d'alkyle de formule (Ir) :

R³⁷-OOC-HC⁻(R³⁸)-COO-R'³⁷ (Ir)

dans laquelle :
- R³⁷ et R'³⁷, identiques ou différents, représentent un groupe alkyle contenant de 1 à 12 atomes, de préférence de 1 à 4 atomes ;
- R³⁸ est choisi parmi l'atome d'hydrogène ; alkyle en C₁-C₁₂ ; cycloalkyle en C₅-C₆ ; cycloalkyle en C₅-C₆, substitué par un ou plusieurs alkyle en C₁-C₄, ou alkoxy en C₁-C₄; phényle ; phényle substitué par un ou plusieurs alkyle en C₁-C₄, ou alkoxy en C₁-C₄ ou par un ou plusieurs atome d'halogène ; phénylalkyle, dont la partie aliphatique contient de 1 à 6 atomes de carbone.

On peut citer également les anions de type malonitrile et malodinitrile comprenant un groupe R³⁷-OOC-HC⁻ (R³⁸)-CN or NC-HC⁻-CN respectivement, dans lesquels R³⁷ et R³⁸ possèdent les significations données précédemment.

Conviennent également les composés de type nitrile contenant un groupe R'²⁸-CN, dans lequel R'²⁸ est de nature quelconque et a la signification donnée pour R¹¹ dans la formule (la) et représente également un cation métallique, de préférence un cation alcalin, et encore plus préférentiellement le lithium, le sodium ou le potassium.

Comme exemples de nitriles, on peut mentionner l'acétonitrile, le cyanobenzène, éventuellement porteur d'un ou plusieurs substituants sur le cycle benzénique ou la cyanhydrine d'éthanal CH₃CH(OH)CN.

Sont également divulgués dans la présente demande, les composés de type acétylénure, qui peuvent être schématisés par la formule (Is) :

R³⁹-C≡C⁻ (Is)

dans ladite formule, R³⁹ est de nature quelconque et en particulier la signification donnée pour R¹¹ dans la formule (la), le contre-ion est un cation métallique de préférence le sodium ou le potassium.

Comme exemples plus particuliers, on peut citer l'acétylure ou le diacétylure de sodium ou de potassium.

Comme autres classes de composés nucléophiles divulgués dans la présente demande, on peut citer les composés de type profène et leurs dérivés, que l'on peut représenter par la formule suivante (It) :

R⁴⁰-HC⁻-COO-R⁴¹ (It)

dans laquelle formule :
- R⁴⁰ a la signification donnée pour R¹¹ dans la formule (la) ; et
- R⁴¹ représente un groupe alkyle ayant de 1 à 12 atomes de carbone, de préférence de 1 à 4 atomes.

Les composés préférés sont ceux qui répondent à la formule (It) dans laquelle R⁴⁰ représente un groupe alkyle ayant de 1 à 12 atomes de carbone, un groupe cycloalkyle ayant 5 ou 6 atomes de carbone et un groupe aryle ayant 6 ou 12 atomes de carbone, ou un hétérocycle azoté ayant 5 ou 6 atomes.

Sont également divulgués dans la présente demande à titre de composés nucléophiles, des composés comprenant un carbanion et dont le contre-ion est un métal et répondant aux formules suivantes : 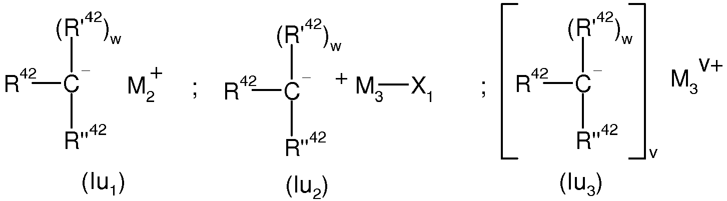 dans lesquelles :
- le groupe R⁴² représente :
   - un groupe alkyle ayant de 1 à 12 atomes de carbone ;
   - un groupe cycloalkyle ayant 5 ou 6 atomes de carbone ;
   - un groupe cycloalkyle ayant 5 ou 6 atomes de carbone, substitué par un ou plusieurs radicaux alkyle ayant de 1 à 4 atomes de carbone, et/ou alkoxy ayant de 1 ou 4 atomes de carbone ;
   - un groupe phénylalkyle dont la partie aliphatique comporte de 1 à 6 atomes de carbone ;
   - un groupe phényle ;
   - un groupe phényle substitué par un ou plusieurs radicaux alkyle ayant de 1 à 4 atomes de carbone ou alkoxy ayant de 1 à 4 atomes de carbone ou par un ou plusieurs atomes d'halogène ; ou
   - un groupe hétérocyclique saturé, insaturé ou aromatique, comprenant de préférence 5 ou 6 atomes et comprenant comme hétéroatome(s), le soufre, l'oxygène ou l'azote ;
- les groupes R'⁴² et R"⁴² représentent un atome d'hydrogène ou un groupe tel que R⁴² ;
- deux des groupes R⁴², R'⁴² et R"⁴² peuvent être reliés ensemble pour former un carbocycle ou un hétérocycle saturé, insaturé ou aromatique ayant de préférence 5 ou 6 atomes de carbone ;
- M₂ représente un élément métallique du groupe (IA) de la classification périodique des éléments ;
- M₃ représente un élément métallique des groupes (IIA) et (IIB) de la classification périodique des éléments ;
- X₁ représente un atome de chlore ou de brome ;
- v est la valence du métal M₃ ; et
- w est égal à 0 ou 1.

Dans le présent texte, on se réfère ci-dessus et dans la suite à la Classification périodique des éléments publiée dans le Bulletin de la Société Chimique de France, n° 1 (1966).

Parmi les composés de formules (Iu₁) à (Iu₃), ceux qui sont préférés font intervenir comme métaux, le lithium, le sodium, le magnésium ou le zinc et X₁ représente un atome de chlore.

Les groupes R⁴², R'⁴² et R"⁴² sont avantageusement un groupe alkyle en C₁-C₄, un groupe cyclohexyle ou phényle ; ou lesdits groupes peuvent former un cycle benzénique, cyclopentadiénique, pyridinique ou thiophénique.

Comme exemples, on peut citer le n-butyllithium, le t-butyllithium, le phényllithium, le bromure ou le chlorure de méthyl- ou éthyl- ou phényl-magnésium, le diphénylmagnésium, le diméthyl- ou le diéthyl-zinc, le cyclopentadiènezinc, le chlorure ou le bromure d'éthylzinc.

Comme autres composés nucléophiles divulgués par la demande, on peut faire appel aux acides boroniques ou leurs dérivés, et plus particulièrement à ceux répondant à la formule (Iv) suivante : 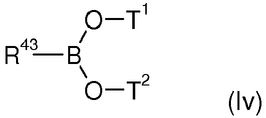 dans laquelle :
- R⁴³ représente un groupe carbocyclique ou hétérocyclique, aromatique, monocyclique ou polycyclique ; et
- T¹ et T² identiques ou différents, représentent un atome d'hydrogène, un groupe aliphatique saturé ou insaturé, linéaire ou ramifié, ayant de 1 à 20 atomes de carbone ou un groupe R⁴³.

Plus précisément, l'acide boronique ou son dérivé répond à la formule (Iv) dans laquelle le groupe R⁴³ représente un groupe carbocyclique ou hétérocyclique aromatique. Ainsi, R⁴³ peut prendre les significations données précédemment pour D dans la formule (Im₁). Toutefois, R⁴³ représente plus particulièrement un groupe carbocyclique tel qu'un groupe phényle, naphtyle ou un groupe hétérocyclique tel qu'un groupe pyrrolyle, pyridyle, pyrimidinyle, pyridazinyle, pyrazinyle, 1,3-thiazolyle, 1,3,4-thiadiazolyle ou thiényle.

Le cycle aromatique peut être également substitué. Le nombre de substituants est généralement au plus de 4 par cycle mais le plus souvent égal à 1 ou 2. On peut se référer à la définition de R³² de la formule (Ik) pour des exemples de substituants.

Les substituants préférés sont les groupes alkyle ou alkoxy ayant de 1 à 4 atomes de carbone, un groupe amino, un groupe nitro, un groupe cyano, un atome d'halogène ou un groupe trifluorométhyle.

En ce qui concerne T¹ et T², qui peuvent être identiques ou différents, ils représentent plus particulièrement un atome d'hydrogène ou un groupe aliphatique acyclique, linéaire ou ramifié, ayant de 1 à 20 atomes de carbone, saturé ou comprenant une ou plusieurs insaturations sous forme de double(s) et/ou de triple(s) liaison(s) sur la chaîne, de préférence de 1 à 3 insaturations, qui sont de préférence des doubles liaisons simples ou conjuguées.

T¹ et T² représentent préférentiellement un groupe alkyle ayant de 1 à 10 atomes de carbone, de préférence de 1 à 4 atomes de carbone, ou un groupe alcényle ayant de 2 à 10 atomes de carbone, de préférence un groupe vinyle ou 1-méthylvinyle.

T¹ et T² peuvent en outre prendre les significations données pour R⁴³ et en particulier tout cycle peut également porter un substituant tel que décrit précédemment.

R⁴³ représente préférentiellement un groupe phényle.

Sont également divulgués les dérivés des acides boroniques tels que les anhydrides et les esters et plus particulièrement les esters d'alkyle ayant de 1 à 4 atomes de carbone.

Comme exemples d'acides arylboroniques, on peut citer notamment l'acide benzèneboronique, l'acide 2-thiophèneboronique, l'acide 3-thiophèneboronique, l'acide 4-méthylbenzèneboronique, l'acide 3-méthylthiophène-2-boronique, l'acide 3-aminobenzèneboronique, l'acide hémisulfate 3-aminobenzèneboronique, l'acide 3-fluorobenzèneboronique, l'acide4-fluorobenzèneboronique, l'acide 2-formylbenzèneboronique, l'acide 3-formylbenzèneboronique, l'acide 4-formylbenzèneboronique, l'acide 2-méthoxybenzèneboronique, l'acide3-méthoxybenzèneboronique, l'acide 4-méthoxybenzèneboronique, l'acide 4-chlorobenzèneboronique, l'acide 5-chlorothiophène-2-boronique, l'acide benzo[b]furane-2-boronique, l'acide 4-carboxybenzèneboronique, l'acide 2,4,6-triméthylbenzèneboronique, l'acide 3-nitrobenzèneboronique, l'acide 4-(méthylthio)benzèneboronique, l'acide 1-naphtalèneboronique, l'acide 2-naphtalèneboronique, l'acide 2-méthoxy-1-naphtalèneboronique, l'acide 3-chloro-4-fluorobenzèneboronique, l'acide 3-acétamidobenzèneboronique, l'acide 3-trifluorométhylbenzèneboronique, l'acide 4-trifluorométhylbenzèneboronique, l'acide 2,4-dichlorobenzèneboronique, l'acide 3,5-dichlorobenzèneboronique, l'acide 3,5-bis-(trifluorométhyl)benzèneboronique, l'acide 4,4'-biphényldiboronique, et les esters et les anhydrides de ces acides.

Comme indiqué précédemment, et selon le procédé de la présente invention, une liaison -C-C ou -C-HE- (où HE représente O, S, P, N, Si, B, et autres) peut être créée par réaction d'un composé nucléophile, tel que ceux qui viennent d'être définis plus haut, avec un composé porteur d'un groupement partant, en particulier un composé comprenant une liaison insaturée située en position α d'un groupe partant.

Le composé porteur d'un groupement partant est représenté par la formule générale (II) :

Y-R⁰ (II)

formule dans laquelle R⁰ représente un groupe hydrocarboné contenant de 2 à 20 atomes de carbone et possède éventuellement au moins une insaturation (une double ou une triple liaison) située en position α d'un groupe partant Y, ou représente un groupe carbocyclique et/ou hétérocyclique, aromatique, monocyclique ou polycyclique.

Conformément au procédé de l'invention, on fait réagir le composé de formule(I) avec un composé de formule(II) dans laquelle :
- R° représente un groupe hydrocarboné aliphatique comprenant éventuellement une double liaison et/ou une triple liaison en position α du groupe partant ou un groupe hydrocarboné cyclique comprenant une insaturation portant le groupe partant ; ou
- R⁰ représente un groupe carbocyclique et/ou hétérocyclique, aromatique, monocyclique ou polycyclique ;
- Y représente un groupe partant, de préférence un atome d'halogène ou un groupe ester sulfonique de formule -OSO₂-R^{e}, dans lequel R^{e} est un groupe hydrocarboné.

Le composé de formule (II) sera désigné par la suite par « composé porteur d'un groupe partant ».

Dans la formule du groupe ester sulfonique, R^{e} est un groupe hydrocarboné d'une nature quelconque. Toutefois, étant donné que Y est un groupe partant, il est intéressant d'un point de vue économique que R^{e} soit d'une nature simple, et représente plus particulièrement un groupe alkyle linéaire ou ramifié ayant de 1 à 4 atomes de carbone, de préférence, un groupe méthyle ou éthyle ; mais il peut également représenter par exemple un groupe phényle ou tolyle ou un groupe trifluorométhyle.

Parmi les groupes Y, le groupe préféré est un groupe triflate, ce qui correspond à un groupe R^{e} représentant un groupe trifluorométhyle.

Comme groupes partants préférés, on choisit de préférence, un atome de brome ou de chlore.

Les composés de formule (II) visés tout particulièrement selon le procédé de l'invention peuvent être classés en trois groupes :
*(1)* les composés de type aliphatique porteurs d'une double liaison et que l'on peut représenter par la formule (IIa) : 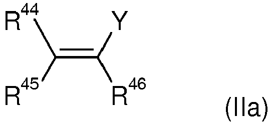 dans laquelle :
   - R⁴⁴, R⁴⁵ et R⁴⁶, identiques ou différents représentent un atome d'hydrogène ou un groupe hydrocarboné ayant de 1 à 20 atomes de carbone qui peut être un groupe aliphatique saturé ou insaturé, linéaire ou ramifié ; un groupe carbocyclique ou hétérocyclique saturé, insaturé ou aromatique, monocyclique ou polycyclique ; un enchaînement quelconque de groupe(s) aliphatique(s) et/ou carbocyclique(s) et/ou hétérocyclique(s) tels que précités ; et
   - Y symbolise le groupe partant tel que précédemment défini ;
*(2)* les composés de type aliphatique portant une triple liaison et que l'on peut représenter par la formule (IIb) :

   R⁴⁴-C≡C-Y (IIb)

   dans laquelle :
   - R⁴⁴ a la signification donnée dans la formule (IIa) ; et
   - Y représente un groupe partant tel que précédemment défini ;
*(3)* les composés de type aromatique que l'on désigne par la suite par « composé halogénoaromatique » et que l'on peut représenter par la formule (IIc) : 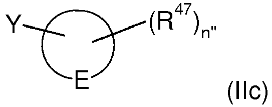 dans laquelle :
   - E symbolise le reste d'un cycle formant tout ou partie d'un système carbocyclique et/ou hétérocyclique, aromatique, monocyclique ou polycyclique ;
   - R⁴⁷, identiques ou différents, représentent des substituants sur le cycle ;
   - Y représente un groupe partant tel que précédemment défini ; et
   - n" représente le nombre de substituants sur le cycle.

L'invention s'applique aux composés insaturés répondant aux formules (IIa) et (IIb), dans lesquelles R⁴⁴ représente préférentiellement un groupe aliphatique acyclique, linéaire ou ramifié, saturé, ayant de préférence de 1 à 12 atomes de carbone.

L'invention n'exclut pas la présence d'une autre liaison insaturée sur la chaîne hydrocarbonée, telle qu'une triple liaison ou bien une ou plusieurs doubles liaisons, qui peuvent être conjuguées ou non.

La chaîne hydrocarbonée peut être éventuellement interrompue par un hétéroatome (par exemple, oxygène ou soufre) ou par un groupe fonctionnel, dans la mesure où celui-ci ne réagit pas, et l'on peut citer en particulier un groupe tel que notamment -CO-.

La chaîne hydrocarbonée peut être éventuellement porteuse d'un ou plusieurs substituants dans la mesure où ils ne réagissent pas dans les conditions réactionnelles, et l'on peut mentionner notamment un atome d'halogène, un groupe nitrile ou un groupe trifluorométhyle.

Le groupe aliphatique acyclique, saturé ou insaturé, linéaire ou ramifié peut éventuellement être porteur d'un substituant cyclique. Par « cycle », on entend un cycle carbocyclique ou hétérocyclique, saturé, insaturé ou aromatique.

Le groupe aliphatique acyclique peut être relié au cycle par un lien valentiel, un hétéroatome ou un groupe fonctionnel, tels que oxy, carbonyle, carboxy, sulfonyle, etc.

Comme exemples de substituants cycliques, on peut envisager des substituants cycloaliphatiques, aromatiques ou hétérocycliques, notamment cycloaliphatiques comprenant 6 atomes de carbone dans le cycle, ou des substituants benzéniques, ces substituants cycliques étant eux-mêmes éventuellement porteurs d'un substituant quelconque, dans la mesure où ils ne gênent pas les réactions intervenant dans le procédé de l'invention. On peut mentionner en particulier, les groupes alkyle ou alkoxy ayant de 1 à 4 atomes de carbone.

Parmi les groupes aliphatiques porteurs d'un substituant cyclique, on vise plus particulièrement les groupes aralkyle ayant de 7 à 12 atomes de carbone, notamment benzyle ou phényléthyle.

Dans les formules (IIa) et (IIb), R⁴⁴ peut également représenter un groupe carbocyclique, saturé ou non, ayant de préférence 5 ou 6 atomes de carbone dans le cycle, de préférence cyclohexyle ; un groupe hétérocyclique, saturé ou non, comportant notamment 5 ou 6 atomes dans le cycle dont 1 ou 2 hétéroatomes tels que les atomes d'azote, de soufre et d'oxygène ; un groupe carbocylique aromatique, monocyclique, de préférence phényle, ou polycyclique condensé ou non, de préférence naphtyle.

Quant à R⁴⁵ et R⁴⁶, ils représentent préférentiellement un atome d'hydrogène ou un groupe alkyle ayant de 1 à 12 atomes de carbone, un groupe phényle ou un groupe aralkyle ayant de 7 à 12 atomes de carbone, de préférence un groupe benzyle.

Dans les formules (IIa) et ou (IIb), R⁴⁴, R⁴⁵ et R⁴⁶ représentent plus particulièrement un atome d'hydrogène, ou bien R⁴⁴, représente un groupe phényle et R⁴⁵ et R⁴⁶ représentent un atome d'hydrogène.

Il doit être noté que R³⁴ et R³⁵ peuvent également représenter un groupe fonctionnel, dans la mesure où ils n'interagissent pas dans la réaction de couplage. À titre d'exemples de tels groupes fonctionnels, on peut mentionner les groupes amido, ester, éther, cyano.

Comme exemples de composés répondant aux formules (IIa) et (IIb), on peut citer notamment le chlorure ou le bromure de vinyle ou les β-bromo- ou β-chlorostyrène, ou le bromoalcyne ou l'iodoalcyne.

L'invention s'applique notamment aux composés halogénoaromatiques répondant à la formule(IIc) dans laquelle E est le reste d'un composé cyclique, ayant de préférence au moins 4 atomes dans le cycle, de préférence 5 ou 6, éventuellement substitué, et représentant au moins l'un des cycles suivants :
- un carbocycle aromatique, monocyclique ou polycyclique, c'est-à-dire un composé constitué par au moins 2 carbocycles aromatiques et formant entre eux des systèmes *ortho-* ou *ortho-* et *péri*-condensés ou un composé constitué par au moins 2 carbocycles dont l'un seul d'entre eux est aromatique et formant entre eux des systèmes *ortho-* ou *ortho-*et *péri*-condensés ;
- un hétérocycle aromatique, monocyclique comportant au moins un des hétéroatomes P, O, N et/ou S, ou un hétérocycle aromatique polycyclique, c'est-à-dire un composé constitué par au moins 2 hétérocycles contenant au moins un hétéroatome dans chaque cycle dont au moins l'un des deux cycles est aromatique et formant entre eux des systèmes *ortho-* ou *ortho-* et *péri*-condensés ; ou un composé constitué par au moins un carbocycle et au moins un hétérocycle dont au moins l'un des cycles est aromatique et formant entre eux des systèmes *ortho-* ou *ortho-* et *péri*-condensés ;

Plus particulièrement, le reste E éventuellement substitué représente préférentiellement le reste d'un carbocycle aromatique, tel que le benzène, d'un bicycle aromatique comprenant deux carbocycles aromatiques, tel que le naphtalène, ou un bicycle partiellement aromatique comprenant deux carbocycles dont l'un deux est aromatique, tel que le tétrahydro-1,2,3,4-naphtalène.

L'invention envisage également le fait que E peut représenter le reste d'un hétérocycle dans la mesure où il est plus électrophile que le composé répondant à la formule (Ik).

Comme exemples particuliers, on peut citer un hétérocycle aromatique tel que le furane, la pyridine ; un bicycle aromatique comprenant un carbocycle aromatique et un hétérocycle aromatique, tel que le benzofurane, la benzopyridine ; un bicycle partiellement aromatique comprenant un carbocycle aromatique et un hétérocycle, tel que le méthylènedioxybenzène ; un bicycle aromatique comprenant deux hétérocycles aromatiques, tel que la 1,8-naphtylpyridine ; un bicycle partiellement aromatique comprenant un carbocycle et un hétérocycle aromatique, tel que la tétrahydro-5,6,7,8-quinoléine.

Dans le procédé de l'invention, on met en oeuvre préférentiellement un composé halogénoaromatique de formule (IIc) dans laquelle E représente un noyau aromatique, de préférence un noyau benzénique ou naphtalénique.

Le composé aromatique de formule (IIc) peut être porteur d'un ou plusieurs substituants.

Dans le présent texte, on entend par « plusieurs », généralement, moins de 4 substituants R⁴⁷ sur un noyau aromatique. On pourra se référer aux définitions du groupe R⁴², dans la formue (Ik), pour divers exemples de substituants.

R⁴⁷ peut également représenter un hétérocycle saturé, insaturé ou aromatique comprenant 5 ou 6 atomes et comprenant soufre, oxygène et/ou azote, en tant qu'hétéroatome(s). À cet égard, on peut citer en particulier les groupes pyrazolyle ou imidazolyle.

Dans la formule (IIc), n" est égal à 0, 1, 2, 3 ou 4, de préférence, égal à 1 ou 2.

Comme exemples de composés répondant à la formule(IIc), on peut citer notamment le *para*-chlorotoluène, le *para*-bromoanisole, le *para* bromotrifluorobenzène.

La quantité du composé porteur d'un groupe partant de formule (II), de préférence de formule (IIa) ou (IIb) ou (IIc), mise en oeuvre est généralement exprimée par rapport à la quantité du composé nucléophile est peut varier dans de grandes proportions ; généralement elle est voisine de la stoechiométrie.

Ainsi, le rapport entre le nombre de moles du composé porteur du groupe partant et le nombre de moles du composé nucléophile varie le plus souvent entre 0,1 et 2,0, de préférence entre 0,5 et 1,5, de préférence encore entre 0,8 et 1,2, et plus préférentiellement entre 0,9 et 1,1.

Conformément au procédé de l'invention, on fait réagir le composé nucléophile, répondant de préférence aux formules (la) à (Iv), avec un composé porteur d'un groupe partant, répondant de préférence à la formule (II), de préférence encore aux formules (IIa) ou (IIb) ou (IIc), en présence d'une quantité efficace d'un système catalytique comprenant un complexe cuivre/phosphine butadiénique tel que défini selon l'invention.

Il a en effet été découvert qu'il est possible de réaliser des réactions de couplage, telles que définies *supra,* entre des composés nucléophiles et des composés porteurs d'un groupe partant, en utilisant un système catalytique comprenant un complexe cuivre/phosphine butadiénique tel que défini selon l'invention.

Comme exemples de systèmes catalytiques susceptibles d'être mis en oeuvre, on peut citer ceux comprenant au moins un complexe cuivre/phosphine butadiénique, tels que ceux définis *supra* sous l'appellation générique Pho-Bu/Cu, c'est-à-dire des complexes du cuivre avec au moins une phosphine butadiénique de formule (1) selon l'invention.

Comme exemple de complexe de type Pho-Bu/Cu particulièrement adapté aux réactions de couplage définies précédemment, on peut citer le complexe monomère phénylbutadiényldiphénylphosphine/iodure de cuivre [Ph-CH=CH-CH=CH-PPh₂]₂CuI, où Ph représente le radical phényle. Comme indiqué également précédemment, le complexe Pho-Bu/Cu peut être préparé *in situ,* dans le milieu réactionnel de la réaction de couplage.

La quantité totale de catalyseur complexe cuivre/phosphine butadiénique mise en oeuvre dans le procédé de l'invention, exprimée par le rapport molaire entre le nombre de moles de complexe exprimé en cuivre, et le nombre de moles de composé porteur d'un groupe partant, varie généralement entre 0,001 et 0,5, de préférence entre 0,01 et 0,1.

Selon une variante, l'invention n'exclut pas que le cuivre soit associé à une faible quantité d'un autre élément métallique désigné par M. L'élément métallique M est choisi dans le groupe (VIII), (IB) et (IIB) de la classification périodique des éléments, telle que définie plus haut.

Comme exemples de métaux M, on peut citer l'argent, le palladium, le cobalt, le nickel, le fer et/ou le zinc.

On utilise avantageusement un mélange comprenant du palladium et du cuivre. Le palladium peut être apporté sous forme d'un métal finement divisé ou sous forme d'un dérivé inorganique tel qu'un oxyde ou un hydroxyde. Il est possible de faire appel à un sel minéral de préférence, nitrate, sulfate, oxysulfate, halogénure, oxyhalogénure, silicate, carbonate, ou à un dérivé organique de préférence, cyanure, oxalate, acétylacétonate ; alcoolate et encore plus préférentiellement méthylate ou éthylate ; carboxylate et encore plus préférentiellement acétate.

Peuvent être également mis en oeuvre des complexes, notamment chlorés ou cyanés de palladium et/ou de métaux alcalins, de préférence sodium, potassium ou d'ammonium. À titre d'exemples de composés susceptibles d'être mis en oeuvre pour la préparation des catalyseurs de l'invention, on peut citer notamment le bromure de palladium(II), le chlorure de palladium(II), l'iodure de palladium(II), le cyanure de palladium(II), le nitrate de palladium (II) hydraté, l'oxyde de palladium(II), le sulfate de palladium(II)dihydraté, l'acétate de palladium(II), le propionate de palladium(II), le butyrate de palladium(II), le benzoate de palladium.

Comme exemples spécifiques de dérivés du nickel, on peut citer les halogénures de nickel(II), tels que chlorure, bromure ou iodure de nickel(II) ; le sulfate de nickel(II) ; le carbonate de nickel(II) ; les sels d'acides organiques comprenant de 1 à 18 atomes de carbone tels que notamment acétate, propionate ; les complexes de nickel(II) tels que l'acétylacétonate de nickel(II), le dibromo-bis-(triphénylphosphine) de nickel (II), le dibromo-bis (bipyridine) de nickel(II) ; les complexes de nickel(0) tels que le bis-(cycloocta-1,5-diène) de nickel(0), le bis-diphénylphosphinoéthane de nickel(0).

On peut également faire appel à des dérivés à base de fer ou de zinc, généralement sous la forme d'oxyde, d'hydroxydes ou de sels tels que les halogénures, de préférence le chlorure, les nitrates et les sulfates.

La quantité de l'élément métallique M représente moins de 50 %, de préférence moins de 25, avantageusement moins de 10 % molaire par rapport au nombre de moles de cuivre.

Encore plus préférentiellement, on met en oeuvre un catalyseur sous forme de complexe avec une phosphine butadiénique ne comprenant que du cuivre.

Intervint également dans le procédé de l'invention, une base dont la fonction est de piéger le groupe partant.

Les bases convenables pour le procédé de l'invention peuvent être caractérisées par leur pKa, qui est avantageusement au moins supérieur ou égal à 2, de préférence compris entre 4 et 30.

Le pKa est défini comme la constante de dissociation ionique du couple acide/base, lorsque l'eau est utilisée comme solvant. Pour le choix d'une base ayant un pKa tel que défini par l'invention, on peut se reporter, entre autres, au Handbook of Chemistry and Physics, 66^{e} édition, pp. D-161 et D-162.

Parmi les bases utilisables, on peut citer entre autres, les bases minérales telles que les carbonates, hydrogénocarbonates, phosphates ou hydroxydes de métaux alcalins, de préférence de sodium, de potassium, de césium, ou de métaux alcalino-terreux, de préférence de calcium, baryum ou magnésium.

On peut également faire appel aux hydrures de métaux alcalins, de préférence l'hydrure de sodium ou aux alcoolates de métaux alcalins, de préférence de sodium ou de potassium, et plus préférentiellement au méthylate, éthylate ou *tert*-butylate de sodium.

Conviennent également des bases organiques comme les amines tertiaires et l'on peut citer plus particulièrement la triéthylamine, la tri-n-propylamine, la tri-n-butylamine, la méthyldibutylamine, la méthyl-dicyclohexylamine, l'éthyldi-isopropylamine, la N,N-diéthylcyclohexylamine, la pyridine, la diméthylamino-4pyridine, la N-méthylpipéridine, la N-éthylpipéridine, la N-n-butylpipéridine, la 1,2-diméthylpipéridine, la N-méthylpyrrolidine, et la 1,2-diméthylpyrrolidine.

Parmi les bases, on choisit préférentiellement les carbonates de métaux alcalins.

La quantité de base mise en oeuvre est telle que le rapport entre le nombre de moles de base et le nombre de moles du composé portant le groupe partant varie préférentiellement entre 1 et 4, de préférence aux environs de 2.

La réaction de couplage, notamment d'arylation ou de vinylation ou d'alcynation, conduite selon l'invention est le plus souvent conduite en présence d'un solvant organique. On fait de préférence appel à un solvant organique, qui ne réagit pas dans les conditions de la réaction.

Comme types de solvants mis en oeuvre dans le procédé de l'invention, on fait appel de préférence à un solvant organique polaire et préférentiellement un solvant organique polaire aprotique.

Des exemples, non limitatifs, de solvants qui peuvent être mis en oeuvre dans le procédé de l'invention, sont choisis parmi :
- les carboxamides linéaires ou cycliques comme le N,N-diméthylacétamide (DMAC), le N,N-diéthylacétamide, le diméthylformamide (DMF), le diéthylformamide ou la 1-méthyl-2-pyrrolidinone(NMP) ;
- le diméthylsulfoxyde (DMSO) ;
- l'hexaméthylphosphotriamide (HMPT) ;
- la tétraméthylurée ;
- les composés nitrés tels que le nitrométhane, le nitroéthane, le 1-nitropropane, le 2-nitropropane ou leurs mélanges, le nitrobenzène ;
- les nitriles aliphatiques ou aromatiques comme l'acétonitrile, le propionitrile, le butanenitrile, l'iso-butanenitrile, le pentanenitrile, le 2-méthylglutaronitrile, l'adiponitrile ;
- la tétraméthylène sulfone (sulfolane) ;
- les carbonates organiques tels que le diméthylcarbonate, le di-isopropylcarbonate, le di-n-butylcarbonate ;
- les esters d'alkyle tels que l'acétate d'éthyle ou d'isopropyle ;
- les hydrocarbures aromatiques halogénés ou non, tels que le chlorobenzène ou le toluène ;
- les cétones telles que l'acétone, la méthyléthylcétone, la méthylisobutylcétone, la cyclopentanone, la cyclohexanone ;
- les hétérocycles azotés tels que la pyridine, la picoline et les quinoléines.

On peut également utiliser un mélange de deux ou plusieurs solvants, notamment choisis parmi ceux listés ci-dessus.

Les solvants préférés sont les carboxamides, tels que le DMF, l'acétonitrile, le DMSO, la NMP et le DMAC.

La quantité de solvant organique à mettre en oeuvre est déterminée en fonction de la nature du solvant organique choisi. Elle est déterminée de telle sorte que la concentration du composé porteur du groupe partant dans le solvant organique soit de préférence comprise entre 5% et 40% en poids.

Selon une variante, le composé nucléophile et/ou le composé porteur du groupe partant peu(ven)t être utilisé(s) comme solvant(s) de la réaction, auquel cas il n'est pas nécessaire d'ajouter un solvant supplémentaire au milieu réactionnel.

La réaction de couplage, c'est-à-dire de création de liaison C-C ou C-HE selon le procédé de l'invention est généralement conduite à une température qui est avantageusement située entre 0°C et 200°C, de préférence, entre 20°C et 170°C, et encore plus préférentiellement entre 25°C et 140°C.

Ladite réaction est généralement mise en oeuvre sous pression atmosphérique, mais des pressions plus élevées pouvant atteindre par exemple 10 bars peuvent être également utilisées.

D'un point de vue pratique, la réaction est simple à mettre en oeuvre.

L'ordre de mise en oeuvre des réactifs n'est pas critique. De préférence, on charge le système catalytique complexe cuivre/phosphine butadiénique, le composé nucléophile, de préférence de formule (la) à (Iv), la base, le composé porteur du groupe partant, de préférence de formule (II), de préférence encore de formule (IIa), (IIb) ou (IIc), et éventuellement le solvant organique. Le milieu réactionnel est alors porté à la température souhaitée.

Comme mentionné précédemment, on peut, en variante, introduire le cuivre, et au moins une phosphine butadiénique en tant que ligand, afin de former le complexe cuivre phosphine butadiénique *in situ.*

On contrôle l'avancement de la réaction en suivant la disparition du composé porteur du groupe partant. En fin de réaction, on obtient un produit du type R-Q-R⁰, R, Q et R⁰ étant tels que définis précédemment.

On récupère le composé obtenu selon les techniques classiques utilisées, notamment par cristallisation dans un solvant organique.

Comme exemples plus spécifiques de tels solvants organiques utilisables dans l'étape de cristallisation, on peut mentionner notamment les hydrocarbures aliphatiques ou aromatiques, halogénés ou non, les carboxamides et les nitriles. On peut citer notamment le cyclohexane, le toluène, le diméthylformamide, l'acétonitrile.

On donne ci-après des exemples de réalisation de l'invention. Ces exemples sont donnés à titre indicatif, sans caractère limitatif.

### Exemples

### Exemples A - Synthèses des phosphines butadiéniques

Les réactions sont effectuées sous atmosphère d'azote pur et sec. À une solution de 10g (29.22 mmole) d'iodure de diméthyldiphényl-phosphonium [Ph₂P(CH₃)]⁺, I⁻ dans 300 mL de tétrahydrofurane (THF) anhydre, 40 mL (2 équivalents, 58,44 mmole) de n-butyllithium (n-BuLi ; 1,6 M) sont additionnés à -50°C, puis le mélange réactionnel est porté à -10°C pendant une heure (solution jaune). À la même température, 5.2 mL (1 équivalent, 29.22 mmole) de chlorodipénylphosphine sont ajoutés. Le mélange réactionnel est laissé sous agitation pour revenir à température ambiante pendant une heure (solution orange) puis on additionne un équivalent (ou plus si nécessaire) de l'aldéhyde α,β-insaturé. Le mélange réactionnel est maintenu sous agitation, à température ambiante, pendant une nuit. On évapore le THF, puis on dissout le résidu dans le dichlorométhane. La phase organique obtenue est ensuite lavée 3 fois à l'eau, séchée sur sulfate de magnésium (MgSO₄) anhydre et concentrée sous vide. Les produits sont séparés, avec des rendements satisfaisants, par chromatographie sur colonne de silice ou d'alumine avec un mélange d'éluant hexane/dichlorométhane approprié pour chaque produit.

### Exemple A-1 : Phosphine butadiénique cinnamique Ph(C₄H₄)PPh₂

Le mode opératoire général décrit ci-dessus a été suivi en utilisant 4 mL (29.22 mmol) d'aldéhyde cinnamique (*trans*). Les deux isomères sont séparés sur colonne d'alumine avec un mélange d'éluant hexane/dichlorométhane (95/5). Le rendement de la réaction est de 90 % (E/Z= 21/79).

### Exemple A-1-1 : Phosphine butadiénique cinnamique (Z)-Ph(C₄H₄)PPh₂ Identification

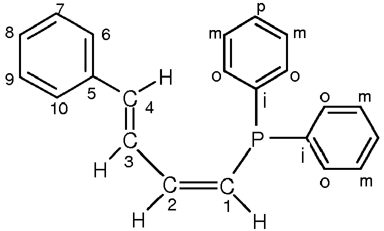

Formule brute : C₂₂H₁₉P
Poids moléculaire : 314,19
Point de fusion : 83-86 °C (hexane/dichlorométhane).
RMN ³¹P{¹H} (CDCl₃) : δ= -28,08 (s, 1 P).
RMN ¹H (CDCl₃) : δ= 6,22 (dd, 1 H, **H₁,** ²J_{H1P}= 0,80 Hz) ; 6,60 (d large, 1 H, **H₄,** ³J_{H4H3}= 15,26 Hz) ; 6,97 (quintuplet, 1 H, **H₂,** ³J_{H2H1}= 11,25 Hz, ³J_{H2H3}= 11,15 Hz, ³J_{H2P}= 22,47 Hz) ; 7,48 (m, 1H, **H₃**, ⁴J_{H3H1}= 0,91 Hz, ³J_{H3H4}= 15,26 Hz, ⁴J_{H3P}= 0,0023 Hz), 7,37-7,14 (m, 15H, **3Ph**).
RMN ¹³C{¹H} (CDCl₃) : δ= 143,96 (d, 1C, **C₂,** ²J_{CP}= 20,47 Hz) ; 138,98 (d, 2C, **Cᵢₚₛ,** ¹J_{CipsP}= 8.56 Hz) ; 136,87 (s, 1C, **C₅**) ; 136,31 (s, 1C, **C₄**) ; 132,68 (d, 4C, **Cₒ**, ²J_{CoP}= 18,98 Hz) ; 129,70 (d, 4C, **C₃,** ³J_{C3P}= 13,90 Hz), 128,60 (d, 4C, **Cₘ,** ³J_{CmP}= 6,58 Hz), 128,48 (s, 2C, **Cp**, ⁴J_{CpP}= 5,12 Hz), 128,14 (s, 2C, **C₆₋₁₀**) ; 126,89 (s, 2C, **C₇₋₉**) ; 126,21 (d,1C, **C₁**, ¹J_{C1P}= 23,82 Hz).
IR (KBr) : ν (cm⁻¹) = 3020 F, 3010 m, , 1620 m, 1570 m, 1470 m, 1430 FF, 1300 f, 1250 f, 1180 m, 1090 F, 1020 F, 980 F, 950 F, 690 FF.

### Exemple A-1-2 : Phosphine butadiénique cinnamique (E)-Ph(C₄H₄)PPh₂

### Identification

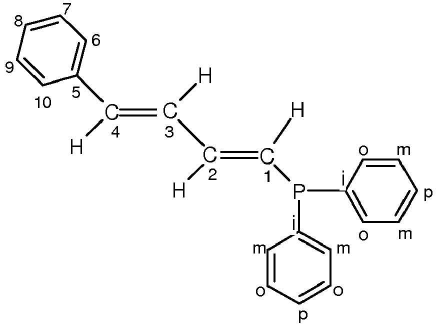

Formule brute : C₂₂H₁₉P
Poids moléculaire : 314.19
RMN ³¹P{1H} (CDCl₃) : δ= -11,32 (s, 1 P).
RMN ¹H (CDCl₃) : δ= 6,68 (m, 3H, **3CH**) ; 7,45-7,26 (m, 15H, **3Ph**) ; 7,79 (qdd, 1H, **CH**).
RMN ¹³C{¹H} (CDCl₃) : δ= 147,55 (d, 1C, **C₃,** ³J_{C3P}= 3,52 Hz) ; 143,74 (d, 1C, **C₂,** ²J_{CP}= 27,98 Hz) ; 138,15 (d, 2C, **C_{iPS},** ¹J_{Cips}P= 9,56 Hz) ; 136,87 (s, 1C, **C₄**) ;134,39 (d, 2C, **C₆₋₁₀,** ⁶J_{CP}= 1,46 Hz); 133,18 (d, 4C, **Cₒ**, ²J_{CoP}= 19,02 Hz), 129,25 (d,1C, **C₁,** ¹J_{C1P}= 12,98 Hz) ; 128,73 (s, 2C, **Cₚ**) ; 128,69 (d, 4C, **Cₘ,** ³J_{CmP}= 16,40 Hz) ; 126,70 (s, 2C, **C₇₋₉**) ; 126,06 (s, 1C, **C₈**).
IR (KBr) : ν (cm⁻¹) = 3040 F, 3010 F, , 1640 F, 1580 F, 1470 F, 1430 FF, 1390 f, 1190 F, 1115 F, 1090 m, 1030 m, 980 FF, 850 m, 720 F, 690 FF.

### Exemple A-2 : Phosphine butadiénique crotonique CH₃(C₄H₄)PPh₂

Le mode opératoire général a été suivi en utilisant 2,4 mL (29,22 mmol) d'aldéhyde crotonique (*trans*-2-butanal). Les deux isomères sont séparés sur colonne d'alumine avec un mélange d'éluant hexane/dichlorométhane (97/3). Le rendement de la réaction est de 80 % (E/Z= 25/75).

### Exemple A-2-1 : Phosphine butadiénique crotonique (Z)-CH₃(C₄H₄)PPh₂

### Identification

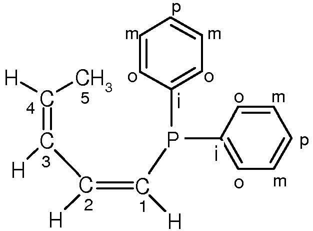

Formule brute : C₁₇H₁₇P
Poids moléculaire : 252.14
RMN ³¹P{¹H} (CDCl₃) : δ= -28,90 (s, 1 P).
RMN ¹H (CDCl₃) : δ= 1,65 (d, 3H, CH₃, ³J_{H3H4}= 6,62 Hz) ; 5,73 (m, 1 H, **H₃**) ; 5 ;94 (dd, 1 H, **H₁,** ³J_{H1H2}= 10,42 Hz, ³J_{H1P}= 2,02 Hz) ; 6,79-6,69 (m, 2H, **H₂** et **H₄**) ; 7,62-7,11 (m, 10H, **2Ph**).
RMN ¹³C{¹H} (CDCl₃) : δ= 144,60 (d,1C, **C₂,** ²J_{C2P}= 21,59 Hz) ; 139,39 (d, 2C, **Cᵢₚₛ**, ¹J_{CipsP}= 8,56 Hz) ; 134,53 (s, 1C, **C₄**) ;132,66 (d, 4C, **Cₒ**, ²J_{CoP}= 18,61 Hz), 129,36 (d, 1C, **C₁,** ¹J_{C1P}= 23,82 Hz) ; 128,53 (d, 4C, **Cₘ,** ³J_{CmP}= 6,70 Hz) ; 128,37 (s, 2C, **Cₚ**) ; 126,18 (d, 1C, **C₃,** ³J_{C3P}= 12,66 Hz) ; 18,47 (s, 1C, **C₅**).
IR (CCl₄) : ν (cm⁻¹) = 3060 F, 3040 F, 3000 F, 2915 F, 1690 FF, 1580 F, 1560 m, 1480 F , 1430 FF, 1370 m, 1300 f, 1100 m, 1030 F, 990 F, 950 F, 930 m, 820 F, 730 FF, 690 FF.

### Exemple A-2-2 : Phosphine butadiénique crotonique (E)-CH₃(C₄H₄)PPh₂

### Identification

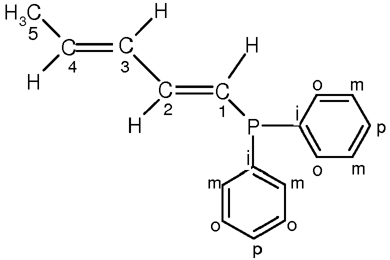

Formule brute : C₁₇H₁₇P
Poids moléculaire : 252.14
RMN ³¹P{¹H} (CDCl₃) : δ= -12,58 (s, 1 P).
RMN ¹H (CDCl₃) : δ= 1,65 (d, 3H, **CH₃,** ⁴J_{H5H3}= 1,51 Hz, ³J_{H5H4}= 7,07 Hz) ; 5,80 (sextuplet, 1H, **H₃**, ³J_{H3H2}= 10,42 Hz, ⁴J_{H3H1}= 6,82 Hz) ; 6,11 (m, 2H, **H₁** et **H₄**), 6,47 (m, 1 H, **H₂,** ³J_{H2H1}= 16,27 Hz, ⁴J_{H2H4}= 9,60 Hz, ³J_{H2P}= 1,26 Hz) ; 7,35-7,14 (m, 10H, **2Ph**).
RMN ¹³C{¹H} (CDCl₃) : δ= 144,88 (d,1C, **C₂**, ²J_{CP}= 31,35 Hz) ; 138,70 (d, 2C, **Cᵢₚₛ,** ¹J_{CP}= 9,86 Hz) ; 132,94 (d, 4C, **Cₒ**, ²J_{CP}= 18,82 Hz) ; 132,56 (s, 1C, **C₄**) ; 132,39 (d, 1C, **C₁**, ¹J_{CP}= 17,31 Hz) ; 128,52 (s, 4C, **Cₘ**) ; 128,39 (s, 2C, **Cₚ**), 127,12 (d, 1C, **C₃,** ³J_{CP}= 9,41 Hz) ; 18,22 (s, 1C, **C₅**).
IR (CCl₄) : ν (cm⁻¹) = 3060 F, 3040 F, 3000 F, 2900 F, 1640 FF, 1580 F, 1475 F , 1430 FF, 1370 m, 1290 m, 1255 f, 1180 f, 1090 F, 1070 F, 1030 FF, 990 FF, 930 f, 690 FF.

### Exemples B - Préparations des complexes

### Cuivre/Phosphines butadiéniques

Dans un tube de schlenk, purgé trois fois par des cycles vide-azote, on introduit successivement la phosphine butadiénique et le sel de cuivre. Le réacteur est purgé sous vide puis rempli de nouveau avec de l'azote. Le solvant (acétonitrile) est alors ajouté à l'aide d'une seringue. Le réacteur est agité à température ambiante pendant 30 min.

Lorsque le sel métallique est liquide, il est ajouté après le solvant à l'aide d'une seringue.

### Exemple B-1 : Complexe phosphine cinnamique (Z) / CuI

Le mode opératoire général décrit ci-dessus a été suivi en utilisant 300 mg (0,954 mmol) de la phosphine butadiénique cinnamique (*Z*) (Exemple A-1-1), 91 mg (0,477 mmol) d'iodure cuivreux (Cul) et 10 mL d'acétonitrile. Le précipité blanc formé est filtré puis recristallisé dans l'acétonitrile.
Rendement : 383 mg (98 %).

### Identification

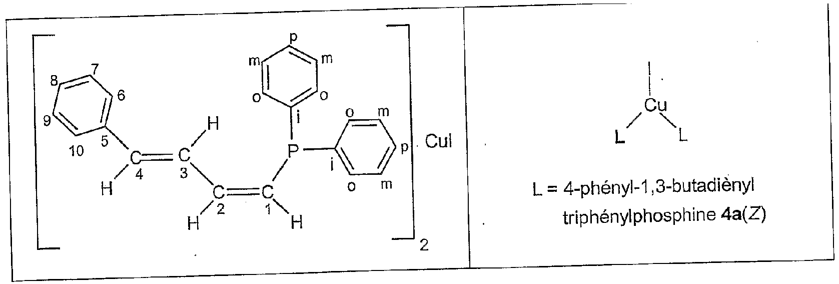

### Complexe iodo di-{η-(4-phényl-1,3-butadiényl diphénylphosphine)} cuivre

Formule brute : C₄₄H₃₈CuIP₂
Poids moléculaire : 818,82
Point de fusion : 200-203°C (acétonitrile).
RMN ³¹P{¹H} (CDCl₃) : δ = -21,86 (s, 1 P).
RMN ¹H (CDCl₃) : δ = 6,03 (dd, 1 H, **H₁,** ³J_{H1H2}= 11,83 Hz, ²J_{H1P}= 6,36 Hz) ; 6,47 (d, 1H, **H₄,** ³J_{H4H3}= 15,26 Hz) ; 6,83 (quintuplet, 1H, **H₂,** ³J_{H2P}= 11,34 Hz) ; 7,13 (dd, 1H, **H₃**, ³J_{H2H3}= 11,59 Hz) ; 7,33-7,18 (m, 15H, **3Ph**). RMN ¹³C{¹H} (CDCl₃) : δ = 143,70 (d, 1C, **C₂,** ²J_{CP}= 4,09 Hz) ; 137,95 (s, 1C, **C₄**) ; 136,30 (s, 1C, **C₅**) ; 134,16 (d, 2C, **Cᵢ**, ¹J_{CiP}= 28,66 Hz) ; 133,29 (d, 4C, **Cₒ**, ²J_{CoP}= 13,77 Hz) ; 129,55 (s, 1C, **C₈**) ; 128,57 (d, 4C, **Cₘ,** ³J_{CmP}= 8,05 Hz), 128,46 (s, 2C, **Cₚ**) ; 128,27 (s, 2C, **C₆₋₁₀) ;** 127,60 (s, 2C, **C₇₋₉**) ; 126,15 (d, 1C, **C₃,** ³J_{C3P}= 13,40 Hz) ; 123,45 (d,1C, **C₁**, ¹J_{C1P}= 23,08 Hz). FAB-MS (mode positif) : m /z = 691 [(Ph(C₄H₄)PPh₂)₂Cu]⁺, 377 [(Ph(C₄H₄)PPh₂)Cu]⁺.
IR (KBr) : ν (cm⁻¹) = 3066 ff, 3023 ff, , 1618 m, 1595 f, 1576 m, 1478 m, 1446 m, 1431 F, 1420F, 1364 f, 1303 m, 1180 ff, 1156 m, 1096 m, 1066 m, 987 F, 943 F, 755 m, 740 FF, 732 FF, 711 FF, 697 FF, 627 m, 616 f.

### Structure par rayons X:

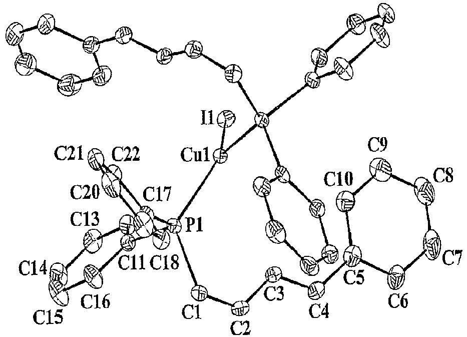

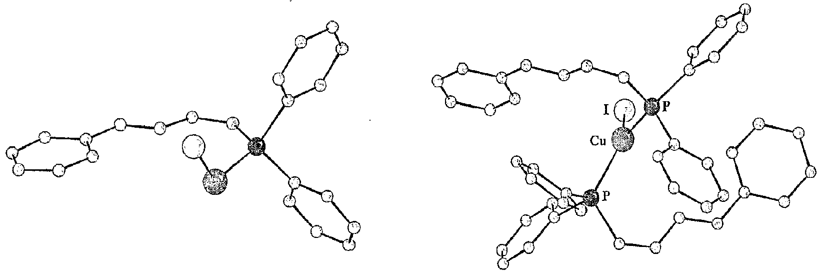

Deux ligands phopshine-butadiénique sont liés au cuivre uniquement par le doublet du phosphore. Les doubles liaisons n'interviennent pas dans la coordination. Le troisième ligand est l'iode.

Les valeurs des liaisons C1-C2 (1.343 Å) et C3-C4 (1.339 Å) indiquent que les doubles liaisons ne sont pas engagées dans la coordination. En effet, ces valeurs correspondent à celle d'une double liaison la diphénylstrylphosphine (tableau ci-dessous).

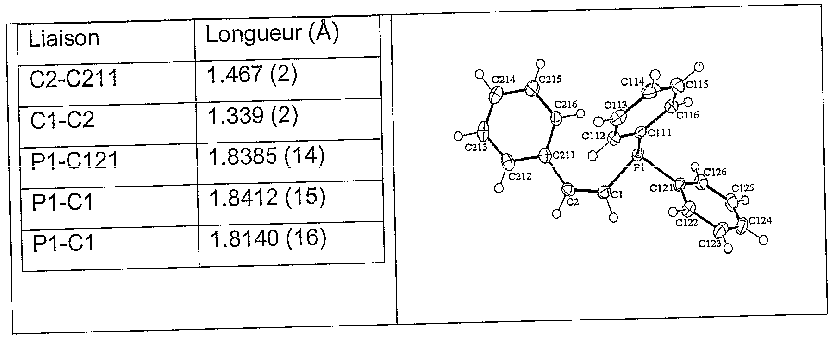

### Exemple B-2 : Complexe phosphine crotonique (Z) / CuI

Le mode opératoire général décrit ci-dessus a été suivi en utilisant 80 mg (0,317 mmol) de la phosphine butadiénique crotonique (Z) (Exemple A-2-1), 30 mg (0,158 mmol) d'iodure cuivreux (Cul) et 5 mL d'acétonitrile. Après traitement le résidu obtenu a été dissout dans le minimum de dichlorométhane puis précipité dans le pentane.
Rendement : 82 mg (75%)

### Identification :

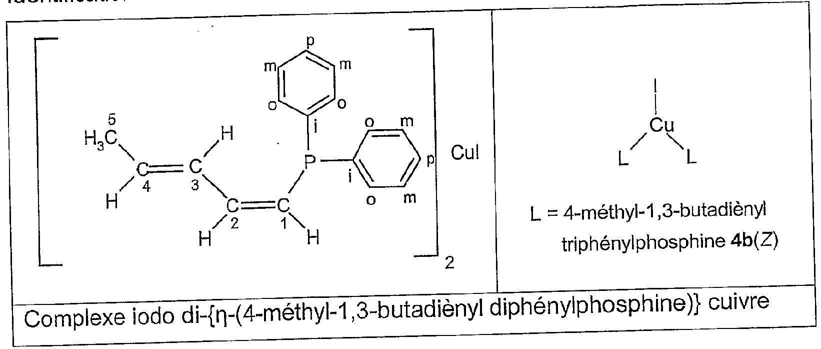

Formule brute : C34H34CuIP2
Poids moléculaire : 694.38
Point de fusion : 94-96°C (pentane).).
RMN 31 P{1 H} (CDCl3): δ = -23.36 (s, 2P) ppm.
RMN 1 H (CDCl3): δ = 1.61 (d, 6H, 2CH3), 5.98-5.65 (m, 4H, 2H1 et 2H3), 6.97-6.53 (m, 4H, 2H2 et 2H4), 7.35-7.15 (m, 120H, 4Ph) ppm.
RMN 13C{1H} (CDCl3): δ = 18.29 (s, 2C, 2C5), 120.78 (d, 2C, 2C1, 1 JC1 P = 21.6 Hz), 128,51 (d, 8C, 8Cm, 3JCmP = 8.9 Hz), 129.35 (s, 4C, 4Cp), 129.67 (s, 2C, 2C3), 133.04 (d, 8C, 8Co, 2JCoP = 14.9 Hz), 134.82 (d, 4C, 4Ci, 1JCiP = 25.7 Hz), 136.55 (s, 2C, 2C4), 144.74 (d,2C, 2C2, 2JC2P = 9.7 Hz) ppm.
FAB-MS (mode positif): *m*/*z* = 567 [{CH3(C4H4)PPh2}2Cu]+, 31,5 [CH3(C4H4)PPh2Cu]+.
IR (KBr): ν (cm-1) = 3060 ff, 3000 ff, 2900 ff, 1640 m, 1560 f, 1540 f, 1480 m ,1430 F, 1370 f, 1310 f, 1100 m, 1035 f, 990 F, 950 m, 930 m, 825 f, 750 F, 730 f" 690 FF.

### Exemples C - Réactions d'arylation en présence de la phosphine butadiénique et d'un sel de cuivre.

### Mode opératoire général

Dans un tube de schlenk de 35 mL, purgé trois fois par des cycles vide-azote, on introduit successivement le sel de cuivre, la phosphine butadiénique (ligand), le nucléophile et la base. L'agent d'arylation puis le solvant (acétonitrile) sont alors ajoutés à l'aide de seringues. La réaction est portée à la température souhaitée et agitée à cette température pendant la durée indiquée.

### Exemple C-1 : Arylation du pyrazole

Le mode opératoire général décrit ci-dessus (solvant : acétonitrile ; température de réaction : 82°C ; durée de la réactbn : 12 heures, ou 30 heures dans le cas du bromobenzène)) a été suivi en utilisant 9.52 mg (0,05 mmol) d'iodure de cuivre Cul, 32 mg (0,1 mmol) de la phosphine butadiénique cinnamique (*Z*) de l'exemple A-1-1, 68 mg (0,75 mmol) de pyrazole, 326 mg (1 mmol) de carbonate de césium (Cs₂CO₃), 56 µL (0,5 mmol) d'iodobenzène (ou 53 µL de bromobenzène) et 500 µL d'acétonitrile. L'huile obtenue après traitement (extraction dichlorométhane/eau) a été purifiée par chromatographie sur colonne de silice (éluant : dichlorométhane/hexane : 50/50).
Rendement : 70 mg d'huile incolore (98 %).

### Identification

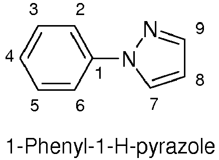

RMN ¹H (CDCl₃) : δ 7,95-7,96 (dd, 1 H, H₇) ; 7,71-7,75 (m, 3H, H**_{2,6,9}**) ; 7,47-7,50 (m, 2H, H**_{3,5}**) ; 7,28-7,34 (m, 1H, H**₄**) ; 6,49-6,50 (dd, 1H, H**₈**).
RMN ¹³C (CDCl₃) : δ 141,09 (C**₉**) ; 140,22 (C**₁**) ; 129,45 (C**_{3,5}**) ; 126,75 (C**₇**) ; 126,46 (C₄) ; 119,23(C**_{2,6}**) ; 107,61 (C₈).
IR (KBr) : ν (cm⁻¹) = 3142 ; 3050 ; 2924 ; 1600 ; 1520 ; 1500 ; 1393 ; 1332 ;, 1198 ; 1120 ; 1046 ; 936 ; 914 ; 755 ; 689 ; 654 ; 610 ; 515.
GC/MS : rt = 14,53 min, M/Z = 144.
HRMS : 145,0766 (M+H). Théorique:145,0766

### Exemple C-2 : Arylation du 1,3-diméthylphénol

Le mode opératoire général (acétonitrile, 82°C, 12heures ou 30 heures dans le cas du bromobenzène)) a été suivi en utilisant 9,52 mg (0,05 mmol) d'iodure de cuivre Cul, 31,4 mg (0,1 mmol) de la phosphine butadiénique cinnamique (*Z*) de l'exemple A-1-1, 91,62 mg (0,75 mmol) de 3,5-diméthylphénol, 212 mg (1 mmol) de phosphate de potassium (K₃PO₄), 56 µL (0,5 mmol) d'iodobenzène (53 µL de bromobenzène) et 500 µL d'acétonitrile. L'huile obtenue après traitement (extraction dichlorométhane/eau) a été purifiée par chromatographie sur colonne de silice (éluant : hexane).
Rendement : 89 mg d'huile incolore (90 %).

### Identification

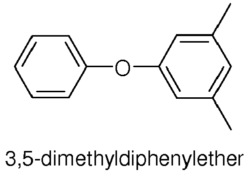

RMN ¹H (CDCl₃) : δ = 7,28-7,42 (m, 2H) ; 7,12-7,17 (m, 1 H) ; 7,03-7,14 (m, 2H) ; 6,79 (m, 1 H) ; 6,69 (m, 2H) ; 2,33 (s, 6H, CH₃).
RMN ¹³C {¹H} (CDCl₃) : δ = 157,50 (Cq) ; 157,22 (Cq) ; 139,61 (2 Cq) ; 129,70 (2 CH) ; 125,04 (CH) ; 123,02 (CH) ; 118,89 (2 CH) ; 116,67 (2 CH) ; 21,35 (2 CH₃).
GC/MS : rt = 18,24 min, M/Z = 198.
Rf : 0,22 (éluant : hexane).

### Exemple C-3 : Arylation du cyanoacétate d'éthyle

### Préparation du 2-phényléthylcyanoacétate

Le mode opératoire général (acétonitrile, 82°C, 12 heures avec l'iodobenzène ; 30 heures dans le cas du bromobenzène) a été suivi en utilisant 9,52 mg (0,05 mmol) d'iodure de cuivre Cul, 31,4 mg (0,1 mmol) de la phosphine butadiénique cinnamique (*Z*) de l'exemple A-1-1, 80 mL (0,75 mmol) de cyanoacétate d'éthyle, 318 mg (1,5 mmol) de phosphate de potassium (K₃PO₄), 56 µL (0,5 mmol) d'iodobenzène (53 µL de bromobenzène) et 500 µL d'acétonitrile. Le résidu obtenu après traitement (extraction dichlorométhane/eau) a été purifiée par chromatographie sur colonne de silice (gradient hexanes/CH₂Cl₂ 100:0 à 75:25).
Rendement : 94 %
RMN ¹H (200 MHz, CDCl₃) : δ (ppm) = 7,37-7,45 (m, 5H) ; 4,71 (s, 1 H) ; 4,25 (q, 3J = 7.1 Hz, 2H) ; 1,28 (t, 3J = 7,1 Hz, 3H).
RMN ¹³C {1H} (50 MHz, CDCl₃): δ (ppm) = 165,0 (Cq) ; 130,0 (Cq) ; 129,3 (2 CH) ; 129,2 (CH) ; 127,9 (2 CH) ; 115,7 (CN) ; 63,3 (CH2) ; 43,7 (CH) ; 13,9 (CH3).
GC/MS (EI) : rt = 15,24 min, M/Z: 189.
Rf : 0,22 (hexanes/CH₂Cl₂ 3:1).

### Exemples D- Réactions d'arylation en présence du complexe phosphine cinnamique (Z°/Cul) obtenu à l'exemple B1

### Mode opératoire général

Dans un tube de schlenk de 35 mL, purgé trois fois par des cycles vide-azote, on introduit successivement le complexe, la base, le nucléophile et. l'agent d'arylation puis le solvant (acétonitrile) sont alors ajoutés à l'aide de seringues. Le tube est scellé sous pression d'azote, puis agité et porté à 82°C, pendant le temps indiqué dans le tableau. Après refroidissement à température ambiante, le mélange est dilué avec du dichlorométhane (environ 20 ml) et filtrés sur Célite (marque déposée). Puis le précipité est lavé plusieurs fois avec du dichlorométhane, le filtrat est lavé à l'eau, les phases organiques sont réunies et séchées sur Na₂SO₄, filtrés et concentrées sous vide, puis les produits bruts obtenus sont purifiés sur colonne de chromatographie en éluant avec un mélange hexane/dichlorométhane.

Pour une complète caractérisation des produits obtenus qui sont tous connus voir les articles suivants : arylpyrazoles (Cristau, H.J.; Cellier, P.P.; Spindler, J.-F.; Taillefer, M. Chemistry, a European Journal, 10, 2004, 5607 or European Journal of Organic Chemistry, 2004, 695), diarylethers (ibid, Organic Letters, 6, 2004, 913), vinyl pyrazole et vinyl aryl ethers (Ouali A.; Renard B.; Spindler, J.-F, Taillefer, M. Chemistry, a European Journal, 2006, 20, 5301).

Les réactions effectuées sont regroupées dans le tableau suivant :

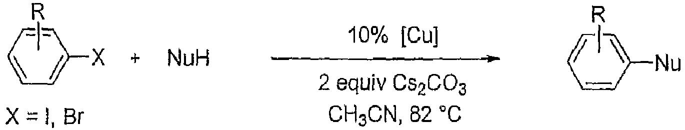

| ArX | NuH | Temps [h] | Rendement [%] |
|---|---|---|---|
| 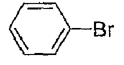 | 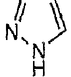 | 4 | 98 |
| 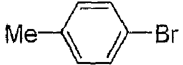 | 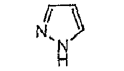 | 4 | 97 |
| 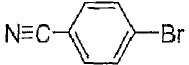 | 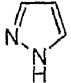 | 4 | 98 |
| 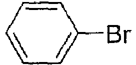 | 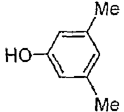 | 10 | 91 ^{[a]} |
| 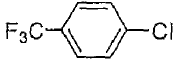 | 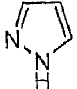 | 24 | 70 ^{[b]} |

| | | | |
|---|---|---|---|
| [a] base : K3PO4. [b] DMF, 140°C. | | | |

### Exemples E - Réactions de vinylation en présence du complexe phosphine cinnamique (Z°/Cul) obtenu à l'exemple B1.

### Selon le mode opératoire général décrit aux exemples D, les réactions regroupées dans le tableau suivant ont été réalisées.

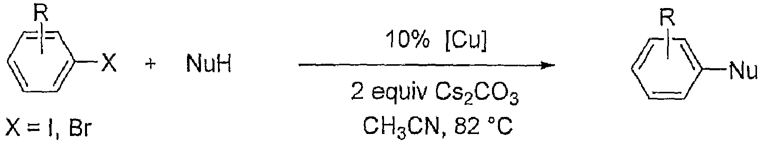

| vinylBr | NuH | Temps [h] | Rendement [%] |
|---|---|---|---|
| 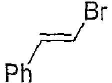 | 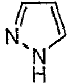 | 4 | 100 |
| 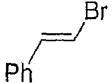 | 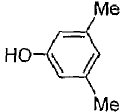 | 10 | 95 |

(0,75 mmol) de cyanoacétate d'éthyle, 318 mg (1,5 mmol) de phosphate de potassium (K₃PO₄), 56 µL (0,5 mmol) d'iodobenzène (53 µL de bromobenzène) et 500 µL d'acétonitrile. Le résidu obtenu après traitement (extraction dichlorométhane/eau) a été purifiée par chromatographie sur colonne de silice (gradient hexanes/CH₂Cl₂ 100:0 à 75:25).
Rendement : 94 %
RMN ¹H (200 MHz, CDCl₃) : δ (ppm) = 7,37-7,45 (m, 5H) ; 4,71 (s, 1 H) ; 4,25 (q, 3J = 7.1 Hz, 2H) ; 1,28 (t, 3J = 7,1 Hz, 3H).
RMN ¹³C {1H} (50 MHz, CDCl₃): δ (ppm) = 165,0 (Cq) ; 130,0 (Cq) ; 129,3 (2 CH) ; 129,2 (CH) ; 127,9 (2 CH) ; 115,7 (CN) ; 63,3 (CH2) ; 43,7 (CH) ; 13,9 (CH3).
GC/MS (EI) : rt = 15,24 min, M/Z: 189.
Rf : 0,22 (hexanes/CH₂Cl₂ 3:1).

### Exemples D- Réactions d'arylation en présence du complexe phosphine cinnamique (Z°/Cul) obtenu à l'exemple B1

### Mode opératoire général

Dans un tube de schlenk de 35 mL, purgé trois fois par des cycles vide-azote, on introduit successivement le complexe, la base, le nucléophile et. l'agent d'arylation puis le solvant (acétonitrile) sont alors ajoutés à l'aide de seringues. Le tube est scellé sous pression d'azote, puis agité et porté à 82°C, pendant le temps indiqué dans le tableau. Après refroidissement à température ambiante, le mélange est dilué avec du dichlorométhane (environ 20 ml) et filtrés sur Célite (marque déposée). Puis le précipité est lavé plusieurs fois avec du dichlorométhane, le filtrat est lavé à l'eau, les phases organiques sont réunies et séchées sur Na₂SO₄, filtrés et concentrées sous vide, puis les produits bruts obtenus sont purifiés sur colonne de chromatographie en éluant avec un mélange hexane/dichlorométhane.

Pour une complète caractérisation des produits obtenus qui sont tous connus voir les articles suivants : arylpyrazoles (Cristau, H.J.; Cellier, P.P.; Spindler, J.-F.; Taillefer, M. Chemistry, a European Journal, 10, 2004, 5607 or European Journal of Organic Chemistry, 2004, 695), diarylethers (ibid, Organic Letters, 6, 2004, 913), vinyl pyrazole et vinyl aryl ethers (Ouali A.; Renard B.; Spindler, J.-F, Taillefer, M. Chemistry, a European Journal, 2006, 20, 5301).

Les réactions effectuées sont regroupées dans le tableau suivant :

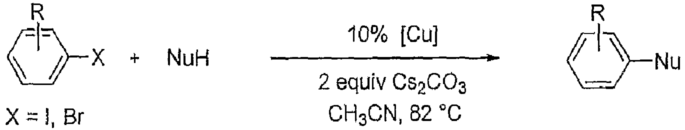

| ArX | NuH | Temps [h] | Rendement [%] |
|---|---|---|---|
| 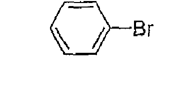 | 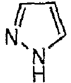 | 4 | 98 |
| 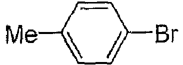 | 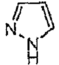 | 4 | 97 |
| 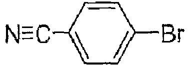 | 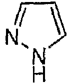 | 4 | 98 |
| 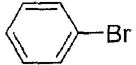 | 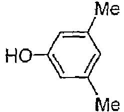 | 10 | 91 ^{[a]} |
| 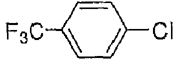 | 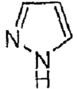 | 24 | 70 ^{[b]} |

| | | | |
|---|---|---|---|
| [a] base : K3PO4. [b] DMF, 140°C. | | | |

### Exemples E - Réactions de vinylation en présence du complexe phosphine cinnamique (Z°/Cul) obtenu à l'exemple B1.

### Selon le mode opératoire général décrit aux exemples D, les réactions regroupées dans le tableau suivant ont été réalisées.

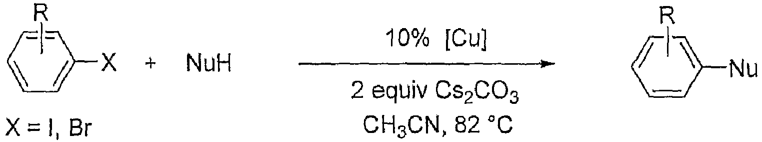

| vinylBr | NuH | Temps [h] | Rendement [%] |
|---|---|---|---|
| 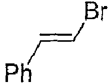 | 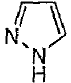 | 4 | 100 |
| 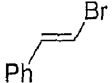 | 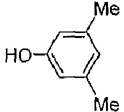 | 10 | 95 |

## Revendications

1. Procédé de création de liaison carbone-carbone (C-C) ou de liaison carbone-hétéroatome (C-HE) en faisant réagir un composé porteur d'un groupement partant avec un composé nucléophile porteur d'un atome de carbone ou d'un hétéroatome (HE) susceptible de se substituer au groupement partant, créant ainsi une liaison C-C ou C-HE, procédé dans lequel la réaction est réalisée en présence d'une quantité efficace d'un système catalytique comprenant au moins un complexe cuivre/phosphine butadiénique,
le complexe cuivre/phosphine butadiénique est un complexe comprenant du cuivre et au moins une phosphine butadiénique de formule (1) : 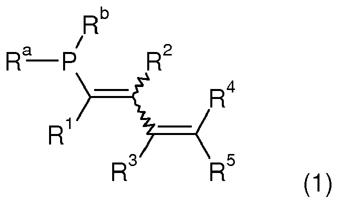 dans laquelle :
• R^{a} et R^{b}, identiques, représentent chacun un radical indépendamment choisi parmi alkyle comprenant 1 à 10 atomes de carbone, phényle, naphtyle, dialkylamino comprenant de 1 à 10 atomes de carbone, alkoxy comprenant de 1 à 10 atomes de carbone, phényloxy, naphtyloxy;
• R¹, R², R³, identiques ou différents, sont choisis indépendamment parmi l'hydrogène, un radical hydrocarboné comprenant de 1 à 20 atomes de carbone ;
• R⁴ et R⁵, identiques ou différents, sont choisis indépendamment parmi l'hydrogène, un radical hydrocarboné comprenant de 1 à 20 atomes de carbone, un radical phényle ou naphtyle,
le composé porteur d'un groupement partant étant choisi parmi les composés de formule Y-R⁰, dans laquelle Y représente le groupement partant et R⁰ représente un groupe hydrocarboné de 2 à 20 atomes de carbone possédant au moins une insaturation en α du groupement partant Y ou représente un carbocycle et/ou hétérocycle aromatique, monocyclique ou polycyclique,
le composé nucléophile étant choisi parmi :
• les composés de formule R²⁵-NH-CO-R²⁶ dans laquelle R²⁵ et R²⁶ identiques ou différents, sont choisi parmi l'hydrogène, un radical phényle ou naphtyle ;
• Les composés de formule 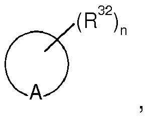 dans laquelle
o A représente l'un des cycles suivants :
- un hétérocycle monocyclique comprenant un ou plusieurs hétéroatomes 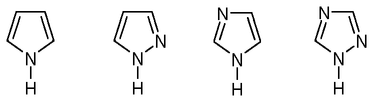 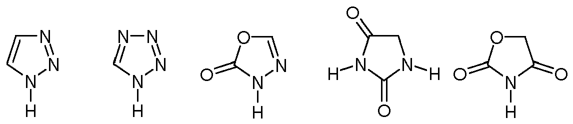 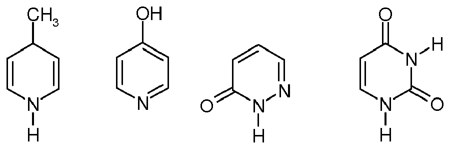
- un bicycle comprenant un carbocycle et un hétérocycle comprenant un ou plusieurs hétéroatomes : 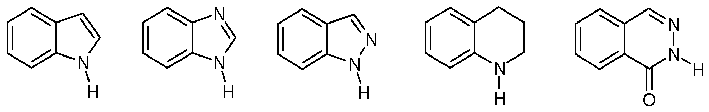
- un tricycle comprenant au moins un carbocycle ou un hétérocycle comprenant un ou plusieurs hétéroatomes : 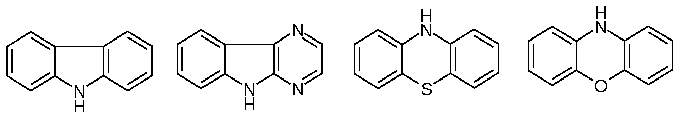
∘ R³², identique(s) ou différent(s), est choisi parmi :
- un groupe alkyle, linéaire ou ramifié, de C1 à C6;
- un groupe alcényle ou alcynyle, linéaire ou ramifié, de C2 à C6;
- un groupe alkoxy ou thioéther linéaire ou ramifié, de C1 à C6;
- un groupe cyclohexyle, phényle ou benzyle ;
- un groupe choisi parmi hydroxyle, thiol, nitrile, azoture, nitro, halogène ou trifluorométhyle ;
o n représente 0, 1, 2, 3 ou 4 ;
• Les composés de formule R³³ - Z, dans laquelle R³³ représente un radical phényle ou naphtyle; Z représente un groupe OH.

2. Procédé selon la revendication 1, dans lequel la phosphine butadiénique de formule (1) est de configuration *Z*, ou de configuration *E*, ou sous forme de mélange en toutes proportions des configurations Zet *E*.

3. Procédé selon l'une quelconque des revendications 1 ou 2, dans lequel la phosphine butadiénique de formule (1) présente les caractéristiques suivantes :
• R^{a} et R^{b} sont identiques et représentent chacun un radical choisi parmi alkyle comprenant de 1 à 10 atomes de carbone, phényle, naphtyle, dialkylamino comprenant de 1 à 10 atomes de carbone, alkoxy comprenant de 1 à 10 atomes de carbone, phényloxy, naphtyloxy ;
• R¹, représente hydrogène, méthyle, éthyle ou propyle ;
• R², R³ et R⁴, identiques ou différents, sont choisis indépendamment parmi l'hydrogène, méthyle, éthyle et propyle ;
• R⁵ est choisi parmi méthyle, éthyle, propyle, phényle.

4. Procédé selon l'une quelconque des revendications 1 ou 2, dans lequel la phosphine butadiénique de formule (1) présente les caractéristiques suivantes :
• R^{a} et R^{b} représentent chacun phényle ;
• R¹ représente hydrogène ;
• R², R³ et R⁴, identiques ou différents, sont choisis indépendamment parmi l'hydrogène, méthyle, éthyle et propyle ;
• R⁵ est choisi parmi méthyle, éthyle, propyle, phényle, naphtyle.

5. Procédé selon l'une quelconque des revendications 1 à 4, dans lequel la phosphine butadiénique de formule (1) est (*Z*)-Ph(C₄H₄)PPh₂, (*E*)-Ph(C₄H₄)PPh₂, (*Z*)-CH₃(C₄H₄)PPh₂ ou (*E*)-CH₃Ph(C₄H₄)PPh₂, où Ph représente phényle.

6. Procédé selon l'une quelconque des revendications 1 à 5, dans lequel le complexe est le complexe monomère phénylbutadiényldiphénylphosphine/iodure de cuivre [Ph-CH=CH-CH=CH-PPh₂]₂CuI, où Ph représente le radical phényle.

7. Procédé selon l'une quelconque des revendications 1 à 6, dans lequel le nombre de moles du composé porteur du groupe partant et le nombre de moles du composé nucléophile varie le plus souvent entre 0,1 et 2,0, de préférence entre 0,5 et 1,5, de préférence encore entre 0,8 et 1,2, et plus préférentiellement entre 0,9 et 1,1.

8. Procédé selon l'une quelconque des revendications 1 à 7, dans lequel la quantité totale de catalyseur complexe cuivre/phosphine butadiénique, exprimée par le rapport molaire entre le nombre de moles de complexe exprimé en cuivre, et le nombre de moles de composé porteur d'un groupe partant, varie généralement entre 0,001 et 0,5, de préférence entre 0,01 et 0,1.

9. Procédé selon l'une quelconque des revendications 1 à 8, dans lequel intervient une base dont le pKa est compris entre 4 et 30.

10. Procédé selon l'une quelconque des revendications 1 à 9, dans lequel intervient une base choisie parmi les carbonates, hydrogénocarbonates, phosphates ou hydroxydes de métaux alcalins, ou de métaux alcalino-terreux, les hydrures de métaux alcalins, les alcoolates de métaux alcalins et les amines tertiaires.

11. Procédé selon l'une quelconque des revendications 1 à 10, qui est réalisé en présence d'un solvant organique polaire, de préférence en présence d'un solvant organique polaire aprotique.

12. Procédé selon l'une quelconque des revendications 1 à 11, dans lequel le composé nucléophile et/ou le composé porteur du groupe partant est(sont) utilisé(s) comme solvant(s) de la réaction.

13. Procédé selon l'une quelconque des revendications 1 à 12, dans lequel le complexe cuivre/phosphine butadiénique est préparé *in situ.*

14. Complexe comprenant du cuivre et au moins une phosphine butadiénique tel que défini selon l'une quelconque des revendications 1 à 6.

15. Procédé selon l'une des revendications 1 à 13, dans lequel le groupement partant Y représente un atome d'halogène ou un ester sulfonique de formule -OSO₂-R^{e}, dans lequel R^{e} est un groupe hydrocarboné de 1 à 4 atomes de carbone.

16. Procédé selon l'une des revendications 1 à 12 ou 15, dans lequel R³² est choisi parmi :
o un groupe alkyle, linéaire ou ramifié, de C1 à C4 atomes de carbone;
o un groupe alcényle ou alcynyle, linéaire ou ramifié, de C2 à C4;
o un groupe alkoxy ou thioéther linéaire ou ramifié, de C1 à C4;
o un groupe cyclohexyle, phényle ou benzyle ;
o un groupe choisi parmi hydroxyle, thiol, nitrile, azoture, nitro, halogène ou trifluorométhyle.

## Patentansprüche

1. Verfahren zur Erzeugung einer Kohlenstoff-Kohlenstoff-(C-C)-Bindung oder einer Kohlenstoff-Heteroatom-(C-HE)-Bindung durch Umsetzen einer Verbindung, welche eine Abgangsgruppe trägt, mit einer nukleophilen Verbindung, welche ein Kohlenstoffatom oder ein Heteroatom (HE) trägt, das geeignet ist, die Abgangsgruppe zu ersetzen, wodurch eine C-C- oder C-HE-Bindung erzeugt wird, wobei bei dem Verfahren die Reaktion in Gegenwart einer wirksamen Menge eines Katalysatorsystems, welches mindestens einen Butadienylphosphin/Kupfer-Komplex umfasst, durchgeführt wird,
wobei der Butadienylphosphin/Kupfer-Komplex ein Komplex ist, welcher Kupfer und zumindest ein Butadienylphosphin der Formel (1) umfasst: 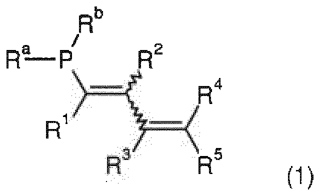 wobei:
• R^{a} und R^{b} gleich sind und jeweils ein Radikal repräsentieren, das unabhängig ausgewählt ist aus Alkyl, umfassend 1 bis 10 Kohlenstoffatome, Phenyl, Naphthyl, Dialkylamin, umfassend 1 bis 10 Kohlenstoffatome, Alkoxy, umfassend 1 bis 10 Kohlenstoffatome, Phenoxy, Naphthoxy;
• R¹, R², R³ gleich oder verschieden sind und unabhängig ausgewählt sind aus Wasserstoff, einem Kohlenwasserstoffradikal, umfassend 1 bis 20 Kohlenstoffatome;
• R⁴ und R⁵ gleich oder verschieden sind und unabhängig ausgewählt sind aus Wasserstoff, einem Kohlenwasserstoffradikal, umfassend 1 bis 20 Kohlenstoffatome, einem Phenyl- oder Naphtylradikal,
wobei die Verbindung, welche eine Abgangsgruppe trägt, ausgewählt ist aus den Verbindungen der Formel Y-R⁰, wobei Y die Abgangsgruppe repräsentiert und R⁰ eine Kohlenwasserstoffgruppe von 2 bis 20 Kohlenstoffatomen repräsentiert, welche zumindest eine ungesättigte Bindung α zu der Abgangsgruppe Y hat, oder einen aromatischen Kohlenstoffzyklus und/oder aromatischen Heterozyklus, welche monozyklisch oder polyzyklisch sind, repräsentiert,
wobei die nukleophile Verbindung ausgewählt ist aus:
• den Verbindungen der Formel R²⁵-NH-CO-R²⁶, wobei R²⁵ und R²⁶ gleich oder verschieden sind und ausgewählt sind aus Wasserstoff, einem Phenyl- oder Naphtylradikal;
• den Verbindungen der Formel 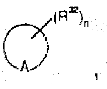 wobei
o A einen der folgenden Zyklen repräsentiert:
- einen monozyklischen Heterozyklus, umfassend ein oder mehrere Heteroatom/e 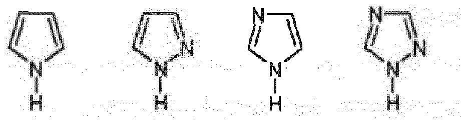 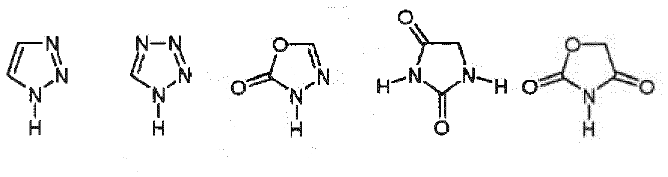 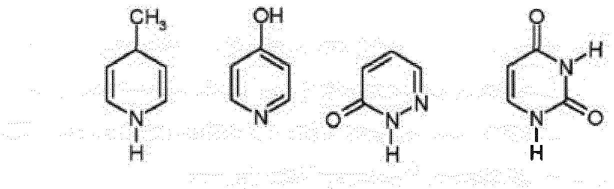
- einen Bizyklus, umfassend einen Kohlenstoffzyklus und einen Heterozyklus, welcher ein oder mehrere Heteroatom/e umfasst: 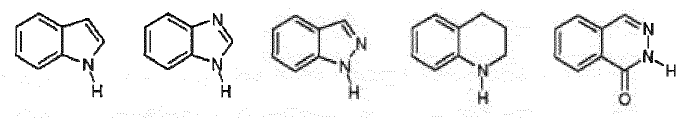
- einen Trizyklus, umfassend mindestens einen Kohlenstoffzyklus oder einen Heterozyklus, welcher ein oder mehrere Heteroatom/e aufweist: 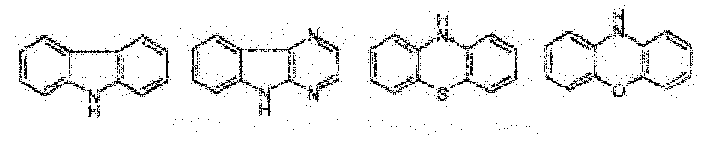
o R³² gleich oder verschieden ist/sind und ausgewählt ist aus:
- einer linearen oder verzweigten Alkylgruppe von C1 bis C6;
- einer linearen oder verzweigten Alkenyl- oder Alkinylgruppe von C2 bis C6;
- einer linearen oder verzweigten Alkoxy- oder Thioethergruppe von C1 bis C6;
- einer Cyclohexyl-, Phenyl-, oder Benzylgruppe;
- einer Gruppe, ausgewählt aus Hydroxyl, Thiol, Nitril, Azid, Nitro, Halogen oder Trifluormethyl;
o n 0, 1, 2, 3 oder 4 repräsentiert;
• den Verbindungen der Formel R³³-Z, wobei R³³ ein Phenyl- oder Naphthylradikal repräsentiert; Z eine OH-Gruppe repräsentiert.

2. Verfahren gemäß Anspruch 1, wobei das Butadienylphosphin der Formel (1) in Z-Konfiguration oder E-Konfiguration ist, oder als Mischung in beliebigen Verhältnissen der Z- und *E*-Konfigurationen ausgebildet ist.

3. Verfahren gemäß irgendeinem der Ansprüche 1 oder 2, wobei das Butadienylphosphin der Formel (1) die folgenden Merkmale aufweist:
• R^{a} und R^{b} sind gleich und repräsentieren jeweils ein Radikal, ausgewählt aus Alkyl, umfassend 1 bis 10 Kohlenstoffatome, Phenyl, Naphthyl, Dialkylamin, umfassend 1 bis 10 Kohlenstoffatome, Alkoxy, umfassend 1 bis 10 Kohlenstoffatome, Phenoxy, Naphthoxy;
• R¹ repräsentiert Wasserstoff, Methyl, Ethyl oder Propyl;
• R², R³ und R⁴ sind gleich oder verschieden und sind unabhängig ausgewählt aus Wasserstoff, Methyl, Ethyl und Propyl;
• R⁵ ist ausgewählt aus Methyl, Ethyl, Propyl, Phenyl.

4. Verfahren gemäß irgendeinem der Ansprüche 1 oder 2, wobei das Butadienylphosphin der Formel (1) die folgenden Merkmale aufweist:
• R^{a} und R^{b} repräsentieren jeweils Phenyl;
• R¹ repräsentiert Wasserstoff;
• R², R³ und R⁴ sind gleich oder verschieden und sind unabhängig ausgewählt aus Wasserstoff, Methyl, Ethyl und Propyl;
• R⁵ ist ausgewählt aus Methyl, Ethyl, Propyl, Phenyl, Naphthyl.

5. Verfahren gemäß irgendeinem der Ansprüche 1 bis 4, wobei das Butadienylphosphin der Formel (1) (Z)-Ph(C₄H₄)PPh₂, (*E*)-Ph(C₄H₄)PPh₂, (*Z*)-CH₃(C₄H₄)PPh₂ oder (*E*)-CH₃Ph(C₄H₄)PPh₂ ist, wobei Ph Phenyl repräsentiert.

6. Verfahren gemäß irgendeinem der Ansprüche 1 bis 5, wobei der Komplex der monomere Phenylbutadienyldiphenylphosphin/Kupferiodid-Komplex [Ph-CH=CH-CH=CH-PPh₂]₂CuI ist, wobei Ph das Phenylradikal repräsentiert.

7. Verfahren gemäß irgendeinem der Ansprüche 1 bis 6, wobei die Zahl der Mole der Verbindung, welche die Abgangsgruppe trägt, und die Zahl der Mole der nukleophilen Verbindung üblicherweise zwischen 0,1 und 2,0, bevorzugt zwischen 0,5 und 1,5, mehr bevorzugt zwischen 0,8 und 1,2, und am meisten bevorzugt zwischen 0,9 und 1,1, variiert.

8. Verfahren gemäß irgendeinem der Ansprüche 1 bis 7, wobei die Gesamtmenge von Butadienylphosphin/Kupfer-Katalysatorkomplex, ausgedrückt durch das molare Verhältnis zwischen der in Kupfer ausgedrückten Zahl der Mole des Komplexes und der Zahl der Mole der Verbindung, welche die Abgangsgruppe trägt, im Allgemeinen zwischen 0,001 und 0,5, bevorzugt zwischen 0,01 und 0,1, variiert.

9. Verfahren gemäß irgendeinem der Ansprüche 1 bis 8, wobei eine Base enthalten ist, welche einen pKa zwischen 4 und 30 aufweist.

10. Verfahren gemäß irgendeinem der Ansprüche 1 bis 9, wobei eine Base enthalten ist, welche ausgewählt ist aus den Carbonaten, Hydrogencarbonaten, Phosphaten oder Hydroxiden von Alkalimetallen oder Erdalkalimetallen, den Hydriden von Alkalimetallen, den Alkoholaten von Alkalimetallen und den tertiären Aminen.

11. Verfahren gemäß irgendeinem der Ansprüche 1 bis 10, welches in Anwesenheit eines polaren organischen Lösungsmittels, bevorzugt in Anwesenheit eines aprotischen, polaren organischen Lösungsmittels, durchgeführt wird.

12. Verfahren gemäß irgendeinem der Ansprüche 1 bis 11, wobei die nukleophile Verbindung und/oder die Verbindung, welche die Abgangsgruppe trägt, als Lösungsmittel der Reaktion verwendet werden/wird.

13. Verfahren gemäß irgendeinem der Ansprüche 1 bis 12, wobei der Butadienylphosphin/Kupfer-Komplex *in situ* hergestellt wird.

14. Komplex, aufweisend Kupfer und zumindest ein Butadienylphosphin, wie gemäß einem der Ansprüche 1 bis 6 definiert.

15. Verfahren gemäß einem der Ansprüche 1 bis 13, wobei die Abgangsgruppe Y ein Halogenatom oder einen Sulfonsäureester der Formel -OSO₂-R^{e} repräsentiert, wobei R^{e} eine Kohlenwasserstoffgruppe mit 1 bis 4 Kohlenstoffatomen ist.

16. Verfahren gemäß einem der Ansprüche 1 bis 12 oder 15, wobei R³² ausgewählt ist aus:
o einer linearen oder verzweigten Alkylgruppe mit C1 bis C4 Kohlenstoffatomen;
o einer linearen oder verzweigten Alkenyl- oder Alkinylgruppe von C2 bis C4;
o einer linearen oder verzweigten Alkoxy- oder Thioethergruppe von C1 bis C4;
o einer Cyclohexyl-, Phenyl-, oder Benzylgruppe;
o einer Gruppe, ausgewählt aus Hydroxyl, Thiol, Nitril, Azid, Nitro, Halogen oder Trifluormethyl.

## Claims

1. A method for the creation of a carbon-carbon (C-C) bond or of a carbon-heteroatom (C-HE) bond by reacting a compound carrying a leaving group with a nucleophilic compound carrying a carbon atom or a heteroatom (HE) capable of replacing the leaving group, thus creating a C-C or C-HE bond, in which process the reaction is carried out in the presence of an effective amount of a catalytic system comprising at least one copper/butadienylphosphine complex,
the copper/butadienylphosphine complex being a complex comprising copper and at least one butadienylphosphine of formula (1): 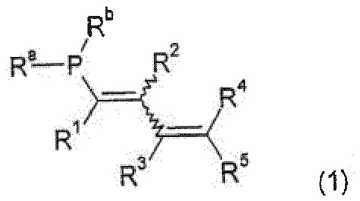 in which:
• R^{a} and R^{b}, identical, each represent a radical chosen independently from alkyl comprising 1 to 10 carbon atoms, phenyl, naphtyl, dialkylamino comprising 1 to 10 carbon atoms, alkoxy comprising 1 to 10 carbon atoms, phenyloxy, naphtyloxy;
• R¹, R², R³, which are identical or different, are chosen independently from hydrogen, a hydrocarbon radical comprising 1 to 20 carbon atoms;
• R⁴ and R⁵, which are identical or different, are chosen independently from hydrogen, hydrocarbon radical comprising 1 to 20 carbon atoms, phenyl, naphtyl;
the compound carrying a leaving group is chosen among the compounds of formula Y-R⁰, in which formula Y represents a leaving group and R⁰ represents a hydrocarbon group comprising from 2 to 20 carbon atoms and at least one unsaturation situated in the α position with respect to a leaving group Y or represents a monocyclic or polycyclic aromatic carbocycle and/or heterocycle group,
the nucleophilic compound being chosen among:
• Compounds of formula R²⁵-NH-CO-R²⁶ in which R²⁵ and R²⁶, identical or different, are chosen among hydrogen, phenyl or naphtyl radical;
• Compounds of formula 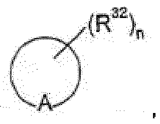 in which
o A represents one of the following cycle :
- a monocyclic heterocycle comprising one or more heteroatoms: 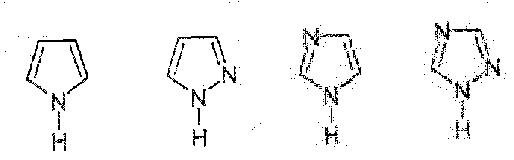 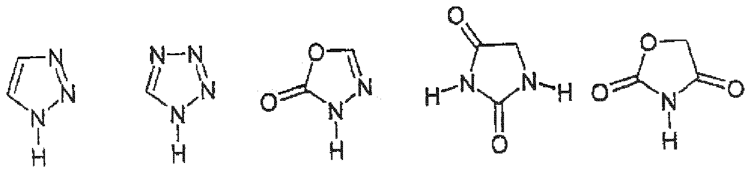 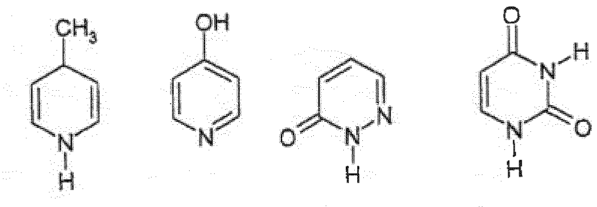
- a bicycle comprising a carbocycle and a heterocycle comprising one or more heteroatoms: 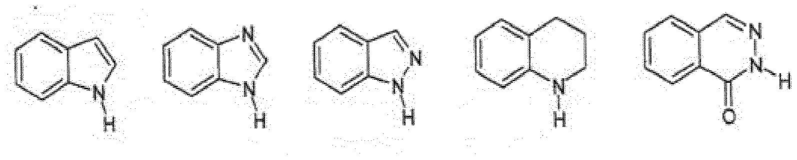
- a tricycle comprising at least one carbocycle or one heterocycle comprising one or more heteroatoms: 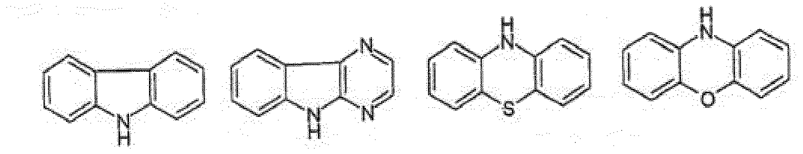
∘ R³², which are identical or differentis chosen among:
- a linear or branched C₁ to C₆ alkyl group;
- a linear or branched C₂ to C₆ alkenyl or alkynyl group;
- a linear or branched C₁ to C₆ alkoxy or thioether group;
- a cyclohexyl, phenyl or benzyl group;
- a group chosen among hydroxyl, thiol, nitrile, azide, nitro, halogen or trifluoromethyl;
∘ n represents 0, 1, 2, 3 or 4;
• Compounds of formula R³³-Z, in whiche R³³ represents a phenyl or naphtyl radical, Z represents a OH group.

2. The process as claimed in claim 1, in which the butadienylphosphine of formula (1) obtained is of Z configuration or of E configuration or is in the form of a mixture in all proportions of the Z and E configurations.

3. The process as claimed in any one of claims 1 or 2, in which the butadienylphosphine of formula (1) exhibits the following characteristics:
• R^{a} and R^{b} are identical and each represent a radical chosen from alkyl comprising 1 to 10 carbon atoms, phenyl, naphthyl, dialkylamino comprising 1 to 10 carbon atoms, alkoxy comprising 1 to 10 carbon atoms, phenyloxy, naphtyloxy;
• R¹ represents hydrogen, methyl, ethyl or propyl;
• R², R³ and R⁴, which are identical or different, are chosen independently from hydrogen, methyl, ethyl and propyl;
• R⁵ is chosen from methyl, ethyl, propyl, phenyl.

4. The process according to any one claims 1 or 2, in which the butadienylphosphine of formula (1) exhibits the following characteristics:
• R^{a} and R^{b} each represent phenyl;
• R¹ represents hydrogen;
• R², R³ and R⁴, which are identical or different, are chosen independently from hydrogen, methyl, ethyl and propyl;
• R⁵ is chosen from methyl, ethyl, propyl, phenyl, naphthyl.

5. The process as claimed in any one of claims 1 to 4, in which the butadienylphosphine of formula (1) is (Z)-Ph(C₄H₄)PPh₂, (E)-Ph(C₄H₄)PPh₂, (Z)-CH₃(C₄H₄)PPh₂ or (E)-CH₃Ph(C₄H₄)PPh₂, where Ph represents phenyl.

6. The process as claimed in any one of claims 1 to 5, whereinthe complex is the phenylbutadienyldiphenylphosphine/copper iodide monomer complex [Ph-CH=CH-CH=CH-PPh₂]₂CuI, where Ph represents the phenyl radical.

7. The process as claimed in any one of claims 1 to 6, wherein the ratio between the number of moles of the compound carrying the leaving group to the number of moles of the nucleophilic compound generally varies between 0.1 and 2.0, preferably between 0.5 and 1.5, more preferably between 0.8 and 1.2 and more preferentially between 0.9 and 1.1.

8. The process as claimed in any one of claims 1 to 7, wherein the total amount of copper/butadienylphosphine complex catalyst, expressed by the molar ratio of the number of moles of complex, expressed as copper, to the number of moles of compound carrying a leaving group, generally varies between 0.001 and 0.5, preferably between 0.01 and 0.1.

9. The process as claimed in any one of claims 1 to 8, wherein a base having a pKa of between 4 and 30 is involved.

10. The process as claimed in any one of claims 1 to 9, wherein a base chosen from carbonates, hydrogencarbonates, phosphates or hydroxides of alkali metals or of alkaline earth metals, alkali metal hydrides, alkali metal alkoxides and tertiary amines is involved.

11. The process as claimed in any one of claims 1 to 10, which is carried out in the presence of a polar organic solvent, preferably in the presence of a polar aprotic organic solvent.

12. The process as claimed in any one of claims 1 to 11, wherein the nucleophilic compound and/or the compound carrying the leaving group is (are) used as solvent(s) for the reaction.

13. The process as claimed in any one of claims 1 to 12, wherein the copper/butadienylphosphine complex is prepared in *situ.*

14. A complex comprising copper and at least one butadienylphosphine such as defined in anyone of claims 1 to 6.

15. The process according to anyone of claims 1 to 13, wherein the leaving group Y represents an halogen atom or a sulfonic ester of formula -OSO₂-R^{e}, wherein Re is a hydrocarbon group comprising 1 to 4 carbon atoms.

16. The process according to anyone of claims 1 to 12 or 15, wherein R32 is chosen among
• an alkyl group, linear or branched, from C1 to C4 carbon atoms;
• a linear or branched C2 to C4 alkenyl or alkynyl group;
• a linear or branched C1 to C4 alkoxy or thioether group;
• a cyclohexyl, phenyl or benzyl group;
• a group chosen among hydroxyl, thiol, nitrile, azide, nitro, halogen or trifluoromethyl.
